# EUROPÄISCHE PATENTSCHRIFT

(11) **EP 1 375 563 B1**
(45) Veröffentlichungstag und Bekanntmachung des Hinweises auf die Patenterteilung: **30.03.2005**
(21) Anmeldenummer: 03014160.0
(22) Anmeldetag: 24.06.2003
(51) Int. Cl.: C08G 73/22, C08G 69/26

(54) **Isoliermaterial für Aluminium und Kupfermetallisierungen**
Insulation material for aluminum and copper metallizations
Matériel isolant pour des métallisations d'aluminium et de cuivre

(30) Priorität: 27.06.2002 DE 10228769
(43) Veröffentlichungstag der Anmeldung: 02.01.2004
(73) Patentinhaber: Infineon Technologies AG, 81669 München (DE)
(72) Erfinder: Sezi, Recai, 91341 Röttenbach (DE); Walter, Andreas, 91349 Egloffstein (DE); Maltenberger, Anna, 91359 Leutenbach (DE); Lowack, Klaus, 91054 Erlangen (DE); Halik, Marcus, 91058 Erlangen (DE)
(74) Vertreter: Müller - Hoffmann & Partner

(56) Entgegenhaltungen:
- EP-A- 0 997 488
- US-B1- 6 235 436

## Beschreibung

Die Erfindung betrifft hochtemperaturbeständige Polymere, ein Verfahren zu deren Herstellung, Polybenzoxazole, sowie ein Verfahren zu deren Herstellung, ein elektronisches Bauteil, welches die Polybenzoxazole als Dielektrikum enthält, sowie ein Verfahren zur Herstellung derartiger elektronischer Bauelemente.

Um ein durch kapazitive Kopplung verursachtes Übersprechen von Signalen zu vermeiden, werden in Mikrochips benachbarte Leiterbahnen durch ein zwischen den Leiterbahnen angeordnetes Dielektrikum voneinander isoliert. Materialien, die als Dielektrikum eingesetzt werden sollen, müssen verschiedene Anforderungen erfüllen. So hängt die Signallaufzeit in Mikrochips sowohl vom Material der Leiterbahn ab, wie auch vom Dielektrikum, das zwischen den Leiterbahnen angeordnet ist. Je geringer die Dielektrizitätskonstante des Dielektrikums ist, um so geringer ist auch die Signallaufzeit. Die bisher verwendeten Dielektrika auf der Basis von Siliziumdioxid besitzen eine Dielektrizitätskonstante von ca. 4. Diese Materialien werden nach und nach durch organische Dielektrika ersetzt, die eine deutlich niedrigere Dielektrizitätskonstante aufweisen. Die Dielektrizitätskonstante dieser Materialien liegt meist unterhalb von 3.

In den gegenwärtig gebräuchlichen Mikrochips bestehen die Leiterbahnen bevorzugt aus Aluminium, AlCu oder AlCuSi. Mit zunehmender Integrationsdichte der Speicherchips geht man wegen seines im Vergleich zu Aluminium geringeren elektrischen Widerstandes auf Kupfer als Leiterbahnmaterial über. Kupfer erlaubt kürzere Signallaufzeiten und damit eine Verringerung des Leiterbahnquerschnittes. Im Gegensatz zu den bisher gebräuchlichen Techniken, bei denen das Dielektrikum in den Gräben zwischen den Leiterbahnen eingefüllt wird, strukturiert man in der Kupfer-Damascene-Technik zuerst das Dielektrikum. Die dabei entstehenden Gräben werden zunächst mit einer sehr dünnen Barriere beschichtet, die beispielsweise aus Titan, Titannitrid, Tantal, Tantalnitrid, Siliziumcarbid, Siliziumnitrid oder Siliziumcarbonitrid besteht. Anschließend werden die Gräben zunächst mit Kupfer gefüllt und daraufhin überschüssiges Kupfer mechanisch abgeschliffen. Das Dielektrikum muss daher stabil gegenüber den zum Schleifen verwendeten Materialien sein und eine ausreichende Haftung auf dem Untergrund aufweisen, um während des mechanischen Schleifprozesses nicht abgelöst zu werden. Ferner müssen die Dielektrika auch eine ausreichende Stabilität in den folgenden Prozessschritten aufweisen, in welchen weitere Bauelemente der Mikrochips erzeugt werden. Dazu müssen sie beispielsweise eine ausreichende Temperaturstabilität aufweisen und dürfen auch bei Temperaturen von mehr als 400 °C keine Zersetzung erleiden. Ferner müssen die Dielektrika gegenüber Prozesschemikalien, wie Lösungsmitteln, Strippern, Basen, Säuren oder aggressiven Gasen stabil sein. Weitere Anforderungen sind eine gute Löslichkeit und ausreichende Lagerstabilität der Vorstufen, aus welchen die Dielektrika erzeugt werden.

Polybenzoxazole (PBO) sind Polymere, die eine sehr hohe Wärmebeständigkeit aufweisen. Die Substanzen werden bereits zur Herstellung von Schutz- und Isolierschichten in Mikrochips verwendet. Polybenzoxazole können durch Zyklisierung aus Poly-o-hydroxyamiden hergestellt werden. Die Poly-o-hydroxyamide zeigen eine gute Löslichkeit in organischen Lösungsmitteln sowie gute Filmbildungseigenschaften. Sie lassen sich mittels Schleudertechnik einfach auf elektronische Bauteile aufbringen. Nach einer Temperaturbehandlung, bei welcher das Poly-o-hydroxyamid zum Polybenzoxazol zyklisiert wird, erhält man ein Polymer, das die gewünschten Eigenschaften aufweist. Polybenzoxazole lassen sich auch direkt in ihrer zyklisierten Form verarbeiten. In der Regel bestehen jedoch in diesem Fall Schwierigkeiten mit der Löslichkeit des Polymers. Bausteine für Poly-o-hydroxyamide werden beispielsweise in der DE 100 11 608 beschrieben.

Um auf der Fläche eines Mikrochips eine möglichst hohe Anzahl an Bauelementen unterbringen zu können, müssen die Bauelemente einen möglichst geringen Platzbedarf auf der Chipoberfläche aufweisen. Um dennoch eine ausreichende Funktionsfähigkeit der Bauelemente gewährleisten zu können, nutzt man zunehmend die Tiefe des Substrats, das heißt die Bauelemente weisen an der Chipoberfläche eine geringe Fläche auf, während ihre Ausdehnung senkrecht zur Chipoberfläche zunimmt. Bei der Herstellung der Mikrochips müssen daher zunehmend Gräben mit einem hohen Aspektverhältnis bearbeitet werden. So muss beispielsweise das Dielektrikum auch ohne Ausbildung von Blasen oder Rissen in schmale und tiefe Gräben eingefüllt werden können. Die Aspektverhältnisse der auszufüllenden Gräben können dabei bis über 4 liegen, wobei die Breite der Gräben zum Beispiel nur 100 nm bis 200 nm beträgt.

Aufgabe der Erfindung ist es, neue Polymere zur Verfügung zu stellen, welche sich leicht auf elektronische Bauteile auftragen lassen und die nach ihrer Zyklisierung eine sehr gute elektronische Isolierwirkung aufweisen, sowie eine ausreichende Stabilität gegenüber Chemikalien und hohen Temperaturen sowie gute Haft- und Fülleigenschaften zeigen.

Diese Aufgabe wird gelöst mit einem Poly-o-hydroxyamid der Formel I: 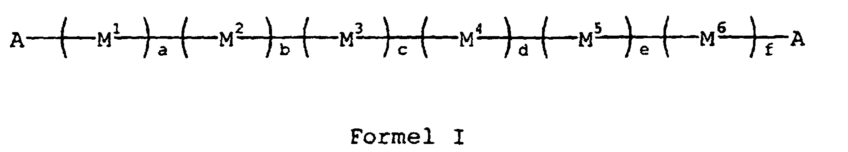 wobei bedeutet:
- M¹:: 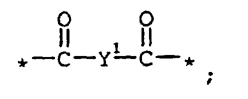
- M²:: 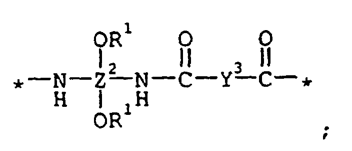
- M³, M⁴, M⁵,: jeweils unabhängig: 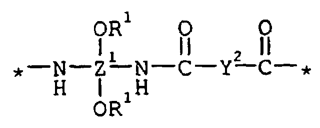 oder 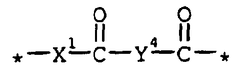 oder 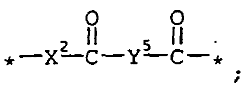
- M⁶:: 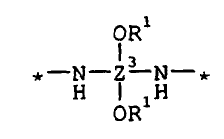
- Z²:: 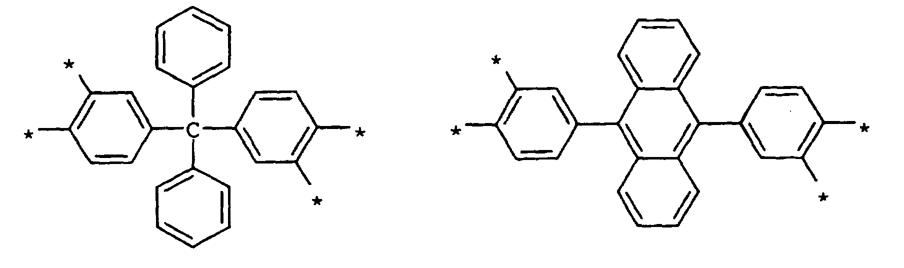 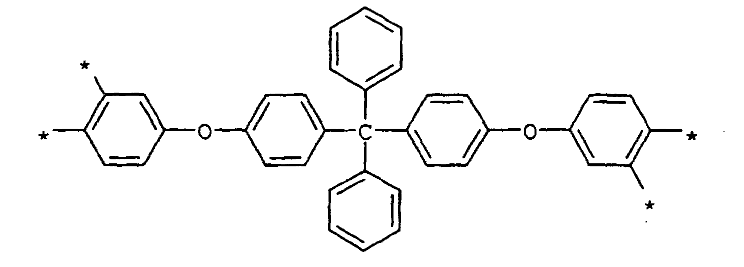 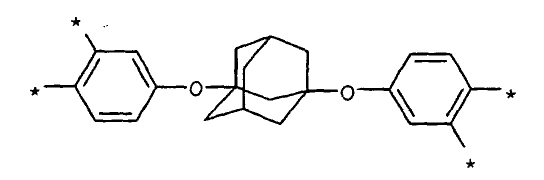 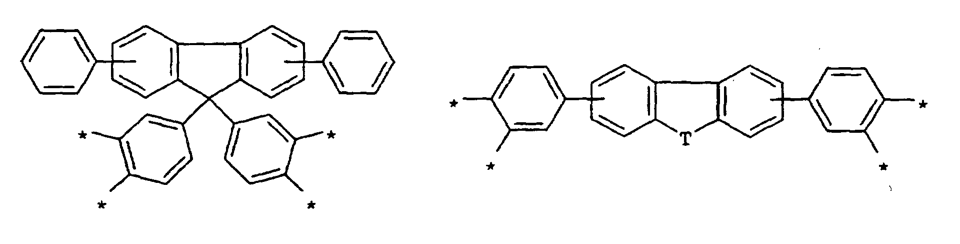 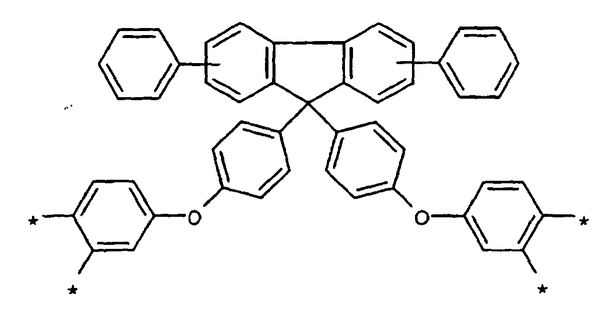 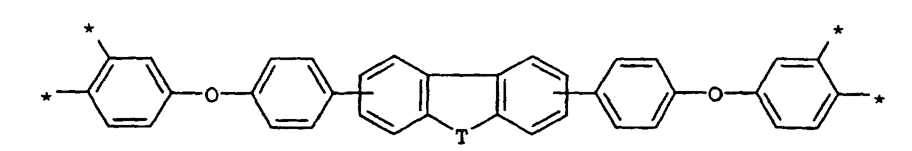
- Z¹, Z³:: jeweils unabhängig die gleiche Bedeutung wie für Z² angegeben, sowie weiter 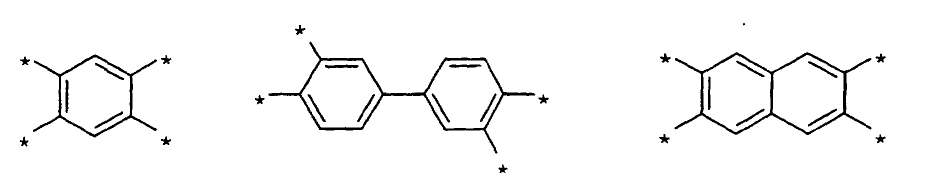 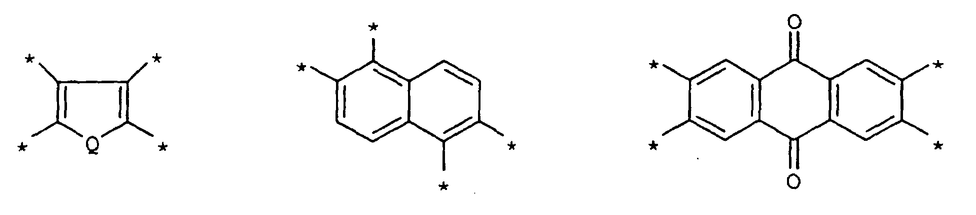 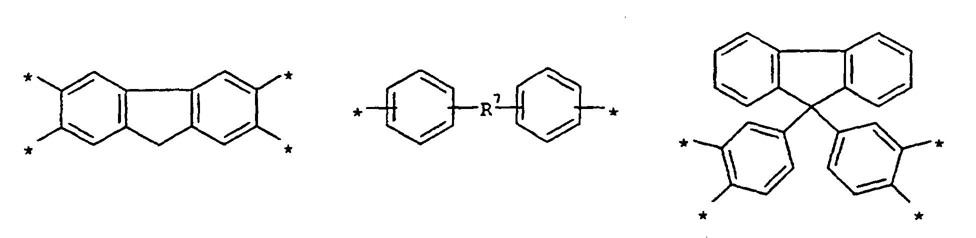 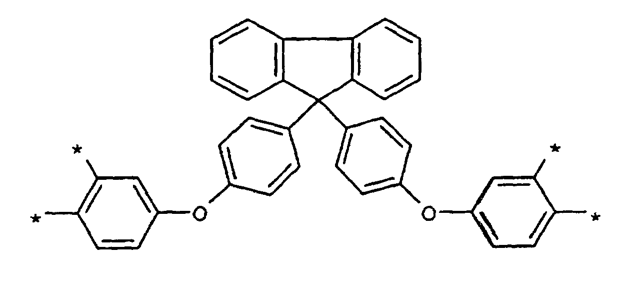
- Y¹, Y², Y³, Y⁴, Y⁵,:: 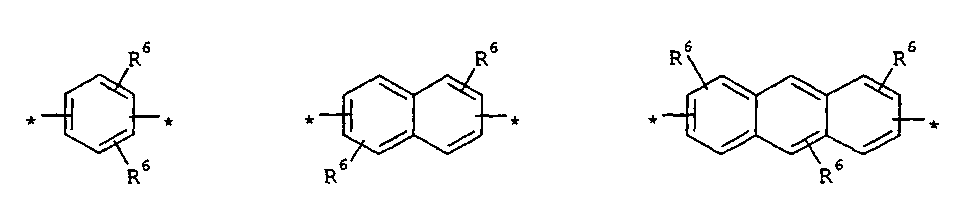 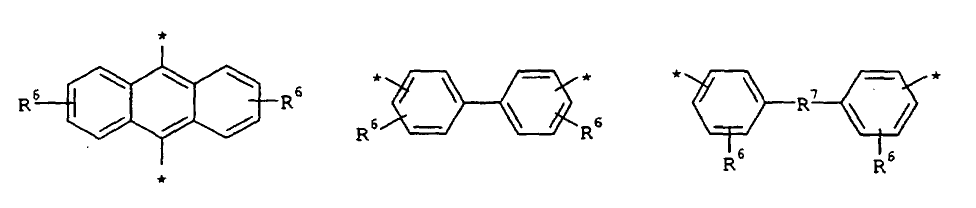 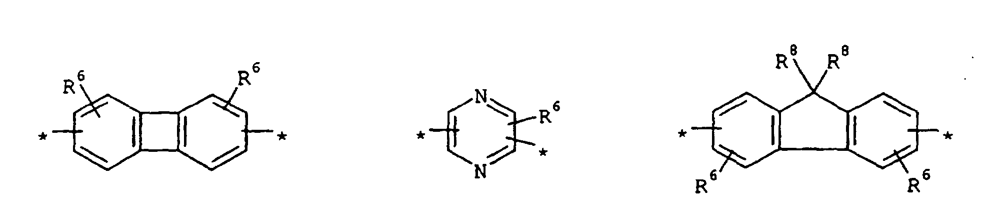 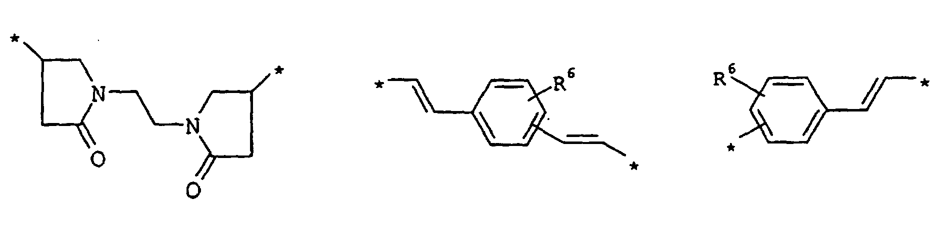 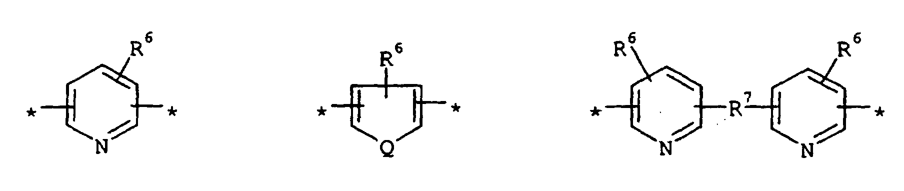 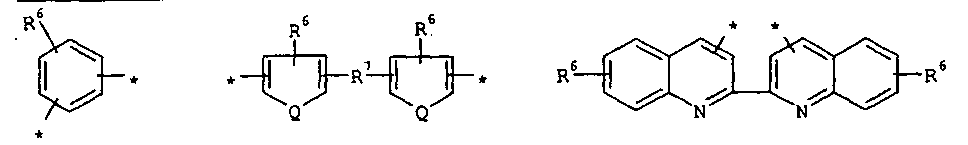 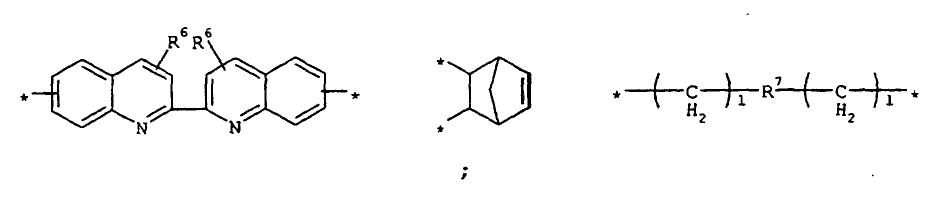
- X¹, X²,: jeweils unabhängig: 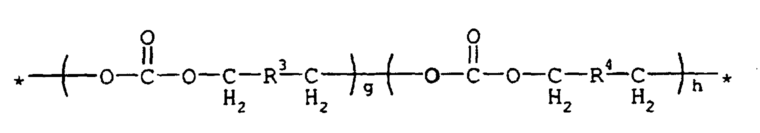 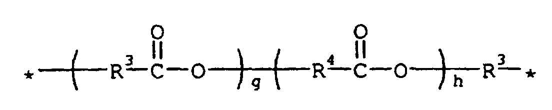 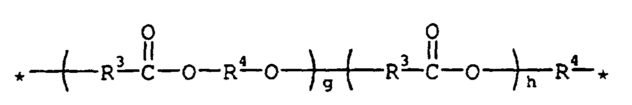 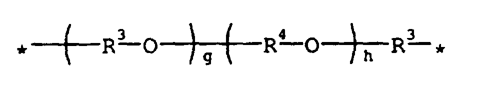 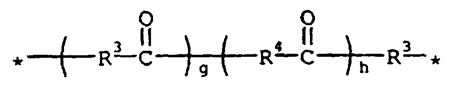 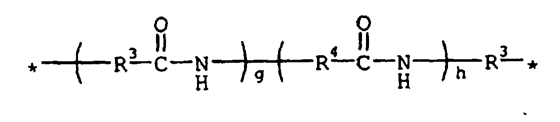
- T:: 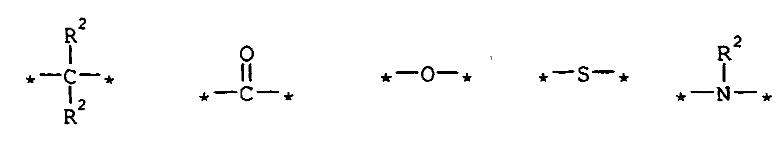
- A:: wenn a = 0 und/oder f = 1 ist 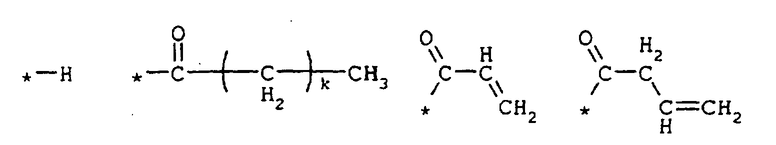 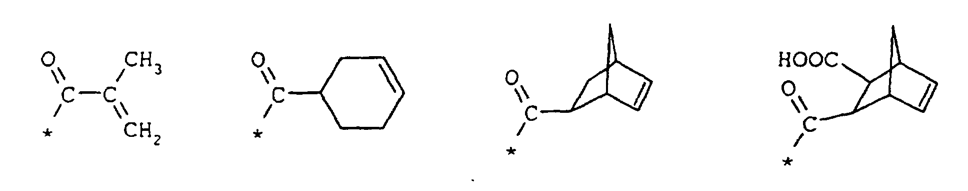 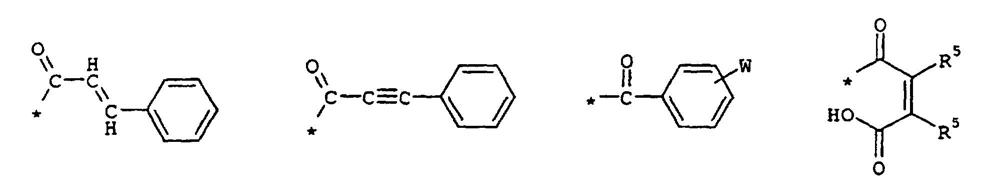 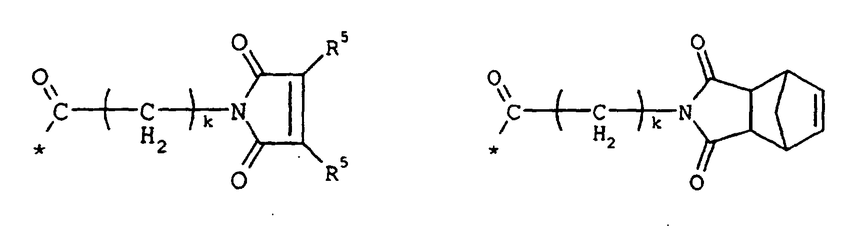 wenn a = 1 und/oder f = 0 ist A: 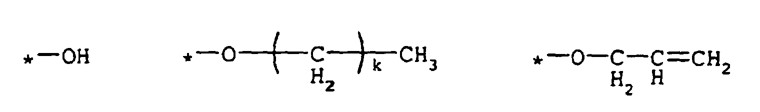 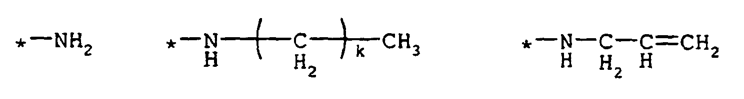 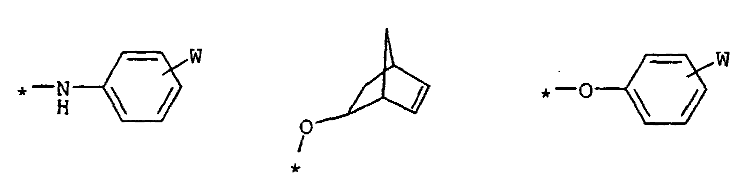
- W:: 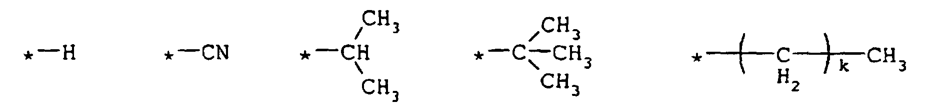 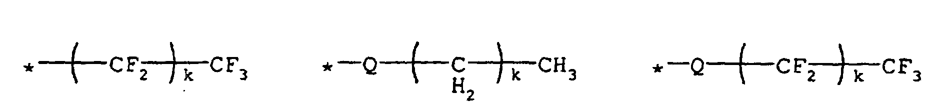 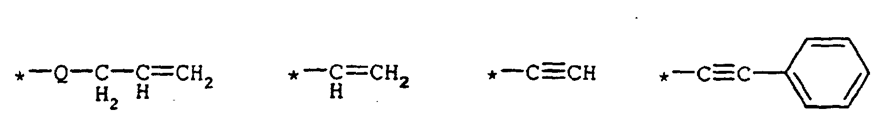 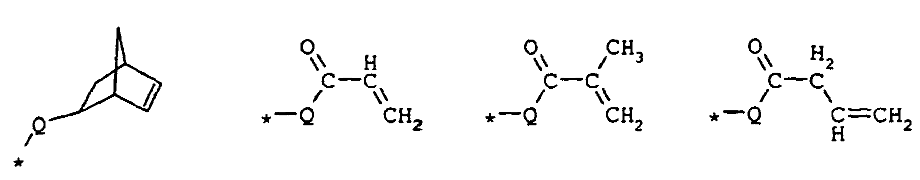 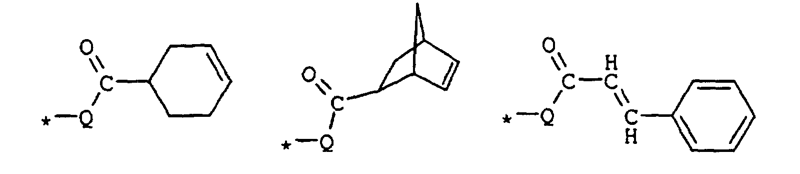 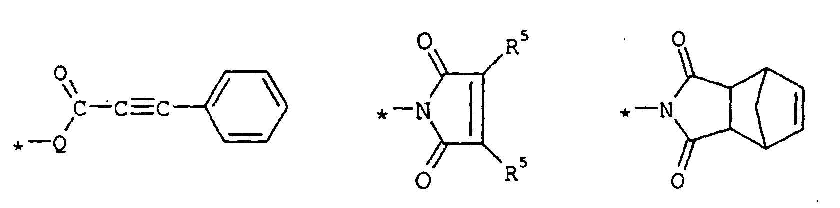 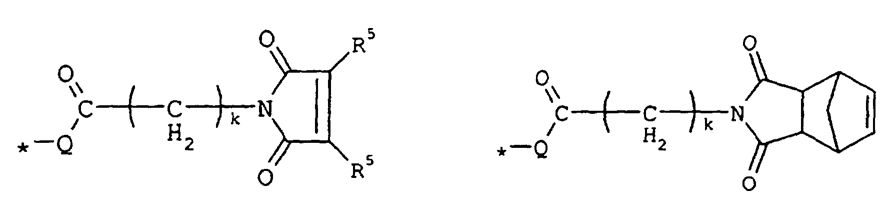
- Q:: 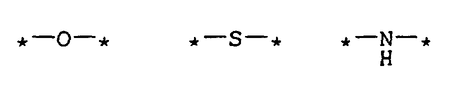
- R¹:: 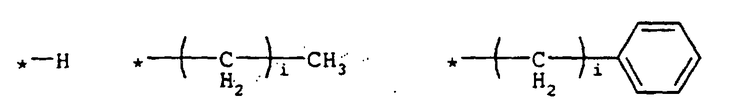 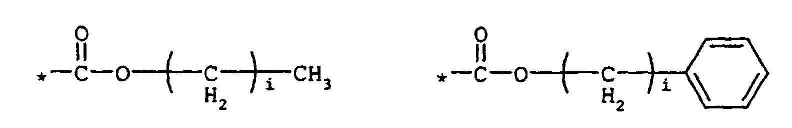
- R²:: -H, eine Alkylgruppe mit 1 bis 10 Kohlenstoffatomen, eine Aryl- oder eine Heteroarylgruppe
- R³, R⁴:: jeweils unabhängig eine substituierte oder unsubstituierte Alkylen-, Arylen- oder Cycloalkylengruppe;
- R⁵:: 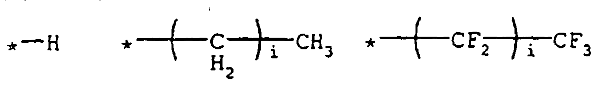 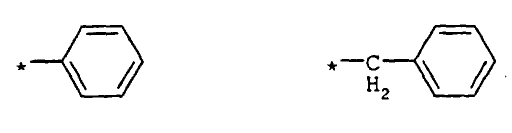
- R⁶:: -H, -CF₃, -OH, -SH, -COOH, -N (R²)₂, eine Alkyl-, Aryl- oder eine Heteroarylgruppe, sowie 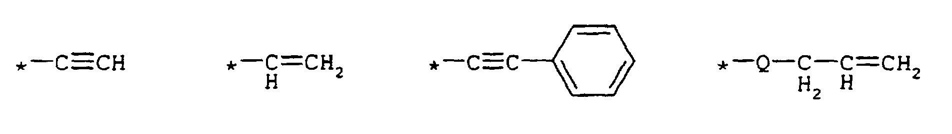 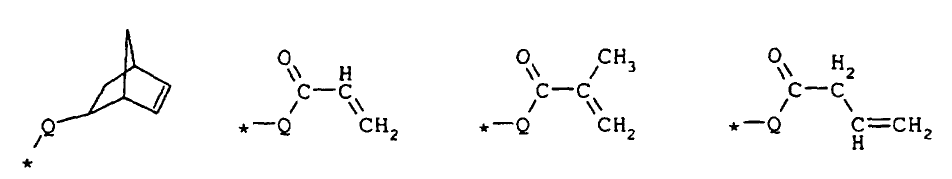 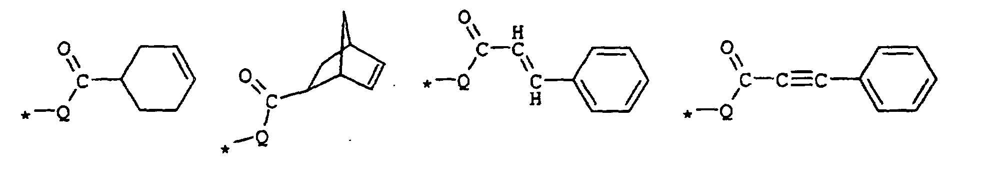 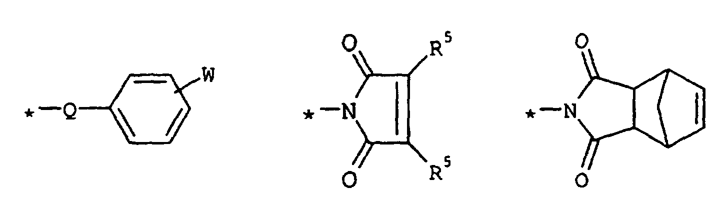 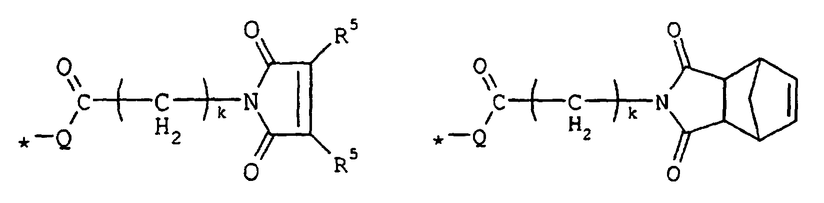
- R⁷:: -O-, -CO-, -NR⁴-, -S-, -SO₂-, -CH₂-, -S₂-, sowie 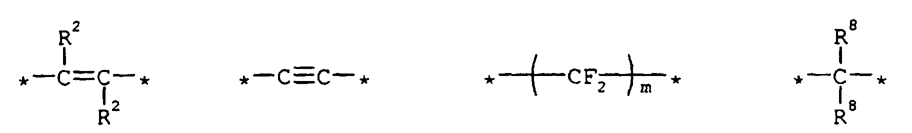 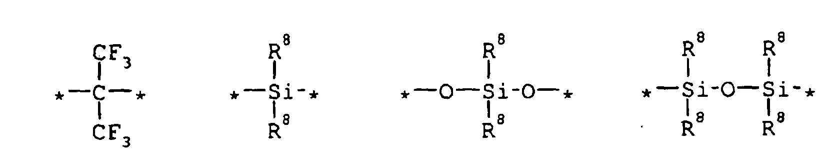 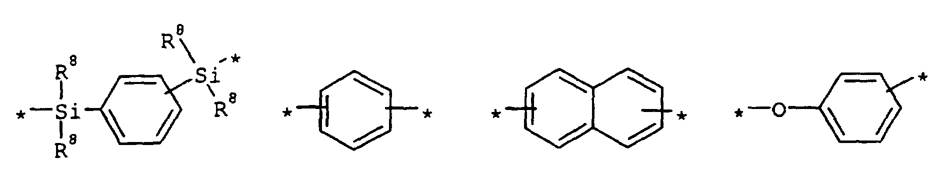 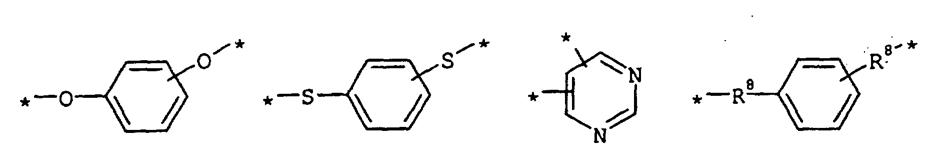 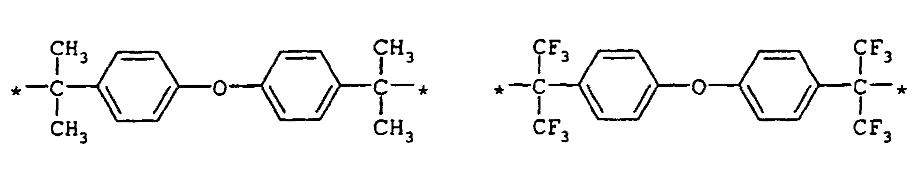 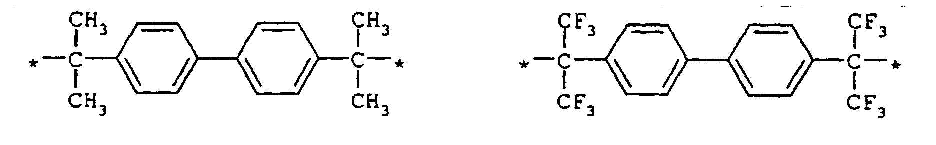
R⁸: eine Alkylgruppe mit 1 bis 10 Kohlenstoffatomen, eine Arylgruppe oder eine Heteroarylgruppe;
a: 0 oder 1;
b: 1 - 200;
c: 0 - 200;
d: 0 - 50;
e: 0 - 50;
f: 0 oder 1;
g: 0 - 100;
h: 0 - 100;
i: 0 - 10;
k: 0 - 10;
l: 1 - 10;
m: 1 - 10;
wobei g und h nicht gleichzeitig 0 sind und wenn R⁷ = -CH₂ist l = 0 - 10.

Die erfindungsgemäßen Poly-o-hydroxyamide der Formel I lassen sich sehr gut auch in enge Gräben mit einem hohen Aspektverhältnis einfüllen und durch Erwärmen zyklisieren. Dabei zeigen die gefüllten Gräben keinerlei Defektstellen, wie Blasen oder Risse. Die nach der Zyklisierung erhaltenen Polybenzoxazole weisen Dielektrizitätskonstanten von weniger als 2,7 auf und eignen sich daher sehr gut als elektrischer Isolator. Die Haftung des aus dem Poly-o-hydroxyamids der Formel I hergestellten Polybenzoxazols an für die Chiptechnologie relevanten Oberflächen, wie Silizium, Siliziumcarbid, Siliziumcarbonitrid, Siliziumnitrid, Siliziumoxid, Titan, Tantal, Titannitrid, Tantalnitrid oder Siliziumoxynitrid ist sehr gut.

Ferner weisen die Polybenzoxazole eine hohe Beständigkeit gegenüber Chemikalien auf, wie sie bei der Herstellung von Mikrochips verwendet werden, wie Lösungsmitteln, Strippern, Basen, Säuren oder aggressiven Gasen. Die Polymermaterialien eignen sich daher sehr gut für mikroelektronische Anwendungen. Außerdem eignen sich die Materialien auch hervorragend für die Kupfer-Damascene-Technik. Während des Schleifprozesses von Kupfer treten keine nachteiligen Effekte, wie Ablösungen, Riss- oder Blasenbildungen auf. Die erfindungsgemäßen Poly-o-hydroxyamide der Formel I sind in vielen organischen Lösungsmitteln sehr gut löslich. Als Lösungsmittel können beispielsweise Aceton, Cyclohexanon, Diethylenglykolmono- bzw. -diethylether, N-Methylpyrrolidon, γ-Butyrolacton,Ethyllactat, Methoxypropylacetat, Tetrahydrofuran, Essigsäureethylester sowie Gemische der genannten Lösungsmittel verwendet werden. Die Lösungen lassen sich zum Beispiel durch Schleuder-, Sprüh- oder Tauchverfahren sehr gut auf Oberflächen elektronischer Bauelemente auftragen und zeigen eine sehr gute Filmqualität. Auch Gräben mit einer Breite von weniger als 100 nm und einem Aspektverhältnis von > 4 lassen sich ohne Schwierigkeiten auffüllen. Die erfindungsgemäßen Poly-o-hydroxyamide der Formel I lassen sich durch Erhitzen auf Temperaturen von 200 bis 500 °C zyklisieren. Dabei wird trotz der Abspaltung von Wasser keine Ausbildung von Defektstellen, wie Rissen, in den gefüllten Gräben beobachtet.

Die Struktureinheiten M¹, M², M³, M⁴, M⁵ und M⁶ können statistisch im Polymer verteilt sein. Es ist aber auch möglich, durch Blockcopolymerisation Abschnitte im Polymer zu erzeugen, welche nur von einem Teil der Wiederholungseinheiten M¹ bis M⁶ gebildet werden. Das Polymer kann gemäß einer Ausführungsform nur die Einheiten M² umfassen, wobei die Enden der Polymerkette durch die Gruppen M¹ und M⁵ bzw. die endständigen Gruppen A abgeschlossen werden können. Die Eigenschaften des Polymers lassen sich variieren, indem gegebenenfalls die Wiederholungseinheiten M² bis M⁵ im Polymer vorgesehen werden. Die durch die Indizes a, b, c, d, e und f bestimmte Kettenlänge kann über die stöchiometrischen Verhältnisse der Ausgangsmaterialien sowie die Reaktionsbedingungen bei der Herstellung des Poly-o-hydroxyamids der Formel I gesteuert werden. Es versteht sich, dass bei einer solchen Polymerisation eine Verteilung der Kettenlängen erhalten wird, wobei die Reaktion so geführt wird, dass die mittlere Kettenlänge innerhalb der oben für die Indizes a bis f angegebenen Wertebereiche liegt. Dabei wird eine enge Molekülgewichtsverteilung der Polymere angestrebt. Für den Index b wird die Reaktion so gesteuert, dass sich Werte im Bereich von 1 bis 200, vorzugsweise 5 bis 100 ergeben. Für den Index c wird die Reaktion so gesteuert, dass sich Werte im Bereich von 0 bis 200, vorzugsweise 0 bis 50 ergeben. Für den Index d wird die Reaktion so geführt, dass sich Werte zwischen 0 und 50, vorzugsweise 0 bis 20 ergeben. Schließlich wird für den Index e die Reaktion so geführt, dass sich Werte von 0 bis 50, vorzugsweise 0 bis 20 ergeben. Die Molekülgewichte bzw. gemittelten Kettenlängen lassen sich mit üblichen Verfahren ermitteln, zum Beispiel Gelpermeationschromatographie (GPC).

Die Struktur der endständigen Gruppen A wird von den endständigen Gruppen M¹ bzw. M⁶ beeinflusst. Für a = 0 bzw. f = 1 ist die endständige Gruppe A an eine NH-Gruppe gebunden. Gilt a = 1 bzw. f = 0, ist A an eine CO-Gruppe gebunden. Die endständigen Gruppen A können über entsprechende aktivierte Vorstufen, z.B. Säurechloride oder Halogenide bzw. Hydroxide oder Amine in das Polymer eingeführt werden. In einzelnen Abschnitten kann das Poly-o-hydroxyamid der Formel I in weiten Grenzen variiert werden. So können für R² Alkylgruppen mit 1 bis 10 Kohlenstoffatomen verwendet werden, wobei diese Alkylgruppen geradkettig oder verzweigt sein können, oder auch als Ring vorliegen können, beispielsweise als Cyclohexylring oder Cyclopentylring. Liegt R² als Arylgruppe vor, so umfasst diese bevorzugt 6 bis 12 Kohlenstoffatome, wobei einzelne Wasserstoffatome der Grundkörper auch durch Alkylgruppen ersetzt sein können, insbesondere Methylgruppen. Als Heteroarylgruppen können für R² Gruppen mit 4 bis 10 Kohlenstoffatomen verwendet werden, wobei als Heteroatom bevorzugt 1 oder 2 Stickstoffatome im Ring vorhanden sind. Daneben können aber auch andere Heteroatome verwendet werden, wie beispielsweise Sauerstoff oder Schwefel. Bevorzugt umfasst der Heteroarylrest zumindest einen 5- oder 6-gliedrigen Ring.

Für die Reste R³ und/oder R⁴ können substituierte oder unsubstituierte Alkylen-, Arylen-, oder Cycloalkylengruppen verwendet werden. Die Alkylengruppen umfassen bevorzugt 1 bis 10 Kohlenstoffatome und können linear oder verzweigt sein. Insbesondere bevorzugt ist R³ eine Methylen- oder Ethylengruppe. Die Arylengruppen umfassen bevorzugt 6 bis 10 Kohlenstoffatome, wobei auch hier einzelne Wasserstoffatome des aromatischen Grundgerüstes durch Alkylgruppen mit 1 bis 10 Kohlenstoffatomen substituiert sein können, wobei hier vorzugsweise eine Methylgruppe verwendet wird. Als Cycloalkylengruppen werden bevorzugt Gruppen mit 5 bis 10 Kohlenstoffatomen verwendet, wobei diese Gruppen bevorzugt 5- und/oder 6-gliedrige Ringe umfassen. In den Resten R³ und/oder R⁴ können allgemein einzelne Wasserstoffatome des Kohlenstoffgerüstes durch heteroatomarme Gruppen substituiert sein, beispielsweise Halogenide, Hydroxylgruppen oder Aminogruppen. Für die Gruppen R⁸ können ebenfalls Alkylgruppen mit 1 bis 10 Kohlenstoffatomen verwendet werden, wobei diese Gruppen linear oder verzweigt sein können. Als Arylgruppen können Gruppen mit vorzugsweise 6 bis 12 Kohlenstoffatomen verwendet werden, wobei einzelne Wasserstoffatome des aromatischen Kohlenstoffgerüsts durch Alkylgruppen mit 1 bis 10 Kohlenstoffatomen substituiert sein können. Als Heteroarylgruppen können Gruppen mit 4 bis 12 Kohlenstoffatomen verwendet werden, welche beispielsweise 1 oder 2 Stickstoffatome als Heteroatome im aromatischen System enthalten.

Wie bereits erwähnt, weisen die aus den Poly-o-hydroxyamiden der Formel I durch Zyklisierung erhaltenen Polybenzoxazole vorteilhafte Eigenschaften in Bezug auf die Temperaturbeständigkeit, die mechanische Festigkeit und die elektrische Isolierwirkung auf.

Gegenstand der Erfindung sind daher auch Polybenzoxazole, welche aus Poly-o-hydroxyamiden der Formel I erhalten werden. Der bei der Zyklisierung von Poly-o-hydroxyamiden der Formel I zu Polybenzoxazolen ablaufende Mechanismus ist im Folgenden schematisch dargestellt:

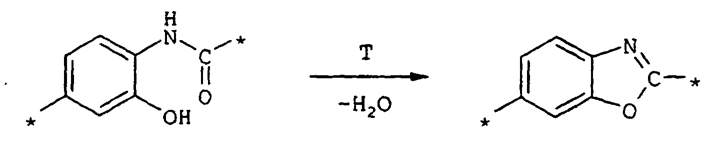

Beim Erhitzen zyklisiert das o-Hydroxyamid zum Oxazol, wobei Wasser freigesetzt wird. Überraschenderweise werden bei der Zyklisierung der Poly-o-hydroxyamide der Formel I keine Blasen oder Risse im Polybenzoxazol ausgebildet, so dass dieses eine außerordentlich hohe Beständigkeit und eine sehr niedrige Defektdichte aufweist.

Die Poly-o-hydroxyamide der Formel I lassen sich durch Umsetzung von bis-o-Aminophenolen mit Dicarbonsäure bzw. ihren aktivierten Derivaten herstellen. Gegenstand der Erfindung ist daher auch ein Verfahren zur Herstellung von Poly-o-hydroxyamiden der Formel I, wobei zumindest ein Monomer der Formel II 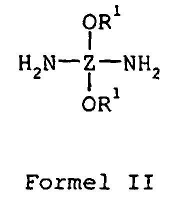 wobei Z steht für Z¹, Z² oder Z³, und Z¹, Z², Z³ sowie R¹ die oben angegebene Bedeutung aufweisen,
mit zumindest einer Dicarbonsäure oder einem aktivierten Dicarbonsäurederivat der Formel III umgesetzt wird, 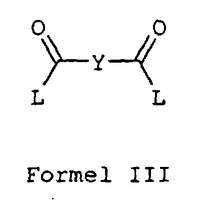 wobei L für eine Hydroxygruppe oder eine aktivierende Gruppe steht und Y für Y¹, Y², Y³, Y⁴, Y⁵ steht, und Y¹, Y², Y³, Y⁴, Y⁵ die oben angegebene Bedeutung aufweisen.

Als aktivierende Gruppe L für die Dicarbonsäurederivate der Formel III können zum Beispiel Säurechloride oder aktivierte Ester, zum Beispiel Sulfonsäureester verwendet werden. Die Umsetzung der Monomere der Formel II und der Dicarbonsäure der Formel III kann jedoch auch in Gegenwart einer die Dicarbonsäure aktivierenden Verbindung erfolgen, wie zum Beispiel Dicarbonyldiimidazol oder Dicyclohexylcarbodiimid. Im Prinzip eignen sich alle Reagenzien, die das bei der Reaktion entstandene Wasser an sich binden. Für die Herstellung der Poly-o-hydroxyamide der Formel I werden die Monomeren der Formel II und die Dicarbonsäure(n) bzw. gegebenenfalls die Dicarbonsäurederivate der Formel III in einem organischen Lösungsmittel bei -20 °C bis 150 °C innerhalb von 5 bis 20 Stunden zur Reaktion gebracht. Bei Bedarf können die Endgruppen des Polymers mit einem geeigneten Reagenz blockiert werden, um so die endständigen Gruppen A einzuführen. Geeignete Reagenzien sind bereits bei der Erläuterung der Verbindungen der Formel I beschrieben worden. Für die Polymersynthese eignen sich als Lösungsmittel insbesondere γ-Butyrolacton, Tetrahydrofuran, N-Methylpyrrolidon und Dimethylacetamid. Es kann jedoch prinzipiell jedes Lösungsmittel verwendet werden, in dem die Ausgangskomponenten gut löslich sind. Das nach der Reaktion entstandene Poly-o-hydroxyamid der Formel I wird durch Zutropfen der Reaktionslösung in ein Fällungsmittel gefällt, gewaschen und getrocknet. Geeignete Fällungsmittel sind Wasser, sowie Alkohole, wie Isopropanol, Butanol oder Ethanol. Es können auch Mischungen dieser Fällmittel verwendet werden. Geeignet kann das Fällungsmittel auch von 0,1 % bis zu 10 % Ammoniak enthalten. Das ausgefallene Polymer kann nach Filtration und Trocknung unmittelbar weiterverarbeitet werden und zum Beispiel für den Auftrag auf ein Halbleitersubstrat in einem geeigneten Lösungsmittel gelöst werden. Geeignete Lösungsmittel sind beispielsweise Aceton, Cyclohexanon, Diethylenglykolmono- bzw. -diethylether, N-Methylpyrrolidon, γ-Butyrolacton, Ethyllactat, Methoxypropylacetat, Tetrahydrofuran oder auch Essigsäureethylester.

Die Polymerisation zum Poly-o-hydroxyamid der Formel I kann in Gegenwart einer Base durchgeführt werden, um freiwerdende Säure abzufangen. Geeignete basische Säurefänger sind beispielsweise Pyridin, Triethylamin, Diazabicyclooctan oder Polyvinylpyridin. Es können aber auch andere basische Säurefänger verwendet werden. Insbesondere bevorzugt werden Verbindungen verwendet, die im für die Synthese verwendeten Lösungsmittel, zum Beispiel N-Methylpyrrolidon, und im Fällungsmittel, zum Beispiel Wasser oder Wasser-Alkohol-Mischungen, gut löslich sind, oder solche, die im Lösungsmittel vollkommen unlöslich sind, wie zum Beispiel vernetztes Polyvinylpyridin. Die Säurefänger lassen sich dann bei der Aufarbeitung des Reaktionsproduktes leicht vom entstandenen Poly-o-hydroxyamid abtrennen.

Ein Gegenstand der Erfindung ist ferner ein Verfahren zur Herstellung der oben beschriebenen Polybenzoxazole, wobei Poly-o-hydroxyamide der Formel I erhitzt werden. Beim Erhitzen erfolgt unter Abspaltung eines kleinen Moleküls, im Allgemeinen Wasser, die Ausbildung eines Oxazolrings, wobei die erfindungsgemäßen Polybenzoxazole erhalten werden.

Das mit dem erfindungsgemäßen Verfahren hergestellte Polybenzoxazol besitzt eine sehr niedrige Dielektrizitätskonstante von ≦ 2,7. Es haftet sehr gut an den für die Chiptechnologie relevanten Oberflächen wie Silizium, Siliziumcarbid, Siliziumcarbonitrid, Siliziumnitrid, Siliziumoxid, Titan, Tantal, Titannitrid, Tantalnitrid oder Siliziumoxinitrid.

Gegenstand der Erfindung ist daher auch ein elektronisches Bauteil, welches das oben beschriebene Polybenzoxazol enthält. Das Polybenzoxazol kann zum Beispiel als Dielektrikum zwischen Leiterbahnen oder Leiterbahnebenen angeordnet sein oder auch als Pufferschicht zwischen Mikrochip und einem diesen umgebenden Gehäuse.

Die erfindungsgemäßen Dielektrika eignen sich hervorragend für die Kupfer-Damascene-Technik. Während des Schleifprozesses treten keine nachteiligen Effekte, wie Ablösungen, Rissoder Blasenbildungen auf.

Gegenstand der Erfindung ist ferner ein Verfahren zur Herstellung eines elektronischen Bauteils, wobei zunächst eine Lösung des Poly-o-hydroxyamids der Formel I in einem Lösungsmittel hergestellt wird. Die Lösung wird auf ein Substrat aufgebracht und das Lösungsmittel verdampft, so dass ein Film erhalten wird. Der Film wird anschließend erhitzt, um das Poly-o-hydroxyamid der Formel I zu zyklisieren und in das Polybenzoxazol zu überführen. Der Film wird dann strukturiert, um eine Resiststruktur zu erhalten, welche Gräben und/oder Kontaktlöcher aufweist. Auf der Resiststruktur wird anschließend ein leitendes Material abgeschieden, beispielsweise Kupfer, so dass die Gräben und/oder Kontaktlöcher mit dem leitenden Material ausgefüllt sind. Abschließend wird überschüssiges leitendes Material entfernt.

Zum Strukturieren des Polybenzoxazolfilms können beispielsweise lithografische Verfahren verwendet werden, wobei eine ätzresistente Masse auf dem Film erzeugt wird. Die Struktur der Maske wird anschließend durch Ätzen in den Film aus dem erfindungsgemäßen Polybenzoxazol übertragen. Als leitendes Material wird vorzugsweise Kupfer verwendet. Zwischen Dielektrikum und leitendem Material kann eine Barriere vorgesehen werden. Als Material für die Barriere eignen sich beispielsweise die bereits weiter oben genannten Materialien. Die Entfernung von überschüssigem leitendem Material erfolgt beispielsweise durch chemisch-mechanisches Planarisieren.

Weiter betrifft die Erfindung ein Verfahren zur Herstellung eines elektronischen Bauteils, wobei zunächst eine Lösung des Poly-o-hydroxyamids der Formel I in einem Lösungsmittel hergestellt wird. Die Lösung wird anschließend auf ein Substrat aufgebracht, welches auf seiner Oberfläche bereits metallische Strukturen aufweist, zwischen denen Gräben und/oder Kontaktlöcher angeordnet sind. Derartige Strukturen sind beispielsweise Leiterbahnen. Das Lösungsmittel wird verdampft, so dass die Gräben und/oder Kontaktlöcher mit dem Poly-o-hydroxyamid der Formel I ausgefüllt sind. Zuletzt wird das Substrat erhitzt, um das Poly-o-hydroxyamid der Formel I zum Polybenzoxazol zu zyklisieren.

Die Haftung der Poly-o-hydroxyamide der Formel I bzw. der aus diesen erhaltenen Polybenzoxazole auf in der Mikroelektronik relevanten Oberflächen, wie zum Beispiel Silizium, Siliziumoxid, Siliziumnitrid, Tantalnitrid, Glas oder Quarz kann durch Zugabe von Haftvermittlern verbessert werden.

Die Erfindung wird anhand von Beispielen und unter Bezugnahme auf die beigefügten Figuren näher erläutert. Dabei zeigt:
- Fig. 1:: eine schematische Darstellung des Versuchsaufbaus zur Bestimmung der Dielektrizitätskonstante;
- Fig. 2: eine Schattenmaske, wie sie in den Beispielen 28 bis 33 zur Herstellung von Elektroden verwendet wird;
- Fig. 3: eine rasterelektronenmikroskopische Aufnahme eines polierten Bruchs durch in einem erfindungsgemäßen Polybenzoxazol angeordnete Kupferleiterbahnen, welche in einem Damascene-Prozess hergestellt wurden;
- Fig. 4: eine rasterelektronenmikroskopische Aufnahme eines Bruchs durch eine aus dem erfindungsgemäßen Polybenzoxazol hergestellte Dual-DamasceneStruktur;
- Fig. 5: eine rasterelektronenmikroskopische Aufnahme eines polierten Bruchs durch Aluminium-Leiterbahnen, wobei die Räume zwischen den Al-Strukturen mit dem erfindungsgemäßen Polybenzoxazol gefüllt wurden.

### Beispiele:

### Verwendete Chemikalien:

### Bisaminophenole:

### 3,3' - Diamino-4,4'-dihydroxytetraphenylmethan-(Bisaminophenol 1)

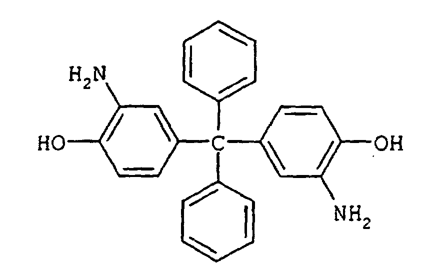

### 4,4'-Di-(4-amino-3-hydroxyphenyloxy)-tetraphenylmethan-(Bisaminophenol 2)

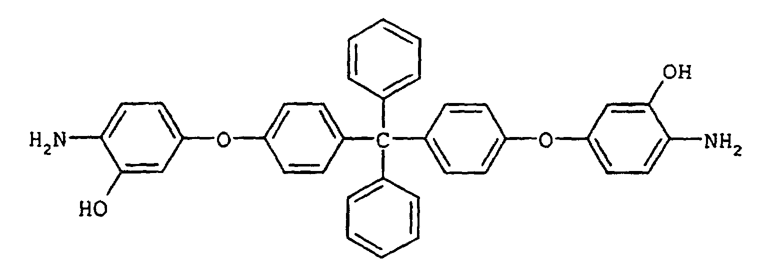

### 9,10-Bis-(3-amino-4-hydroxyphenyl)-anthracen-(Bisaminophenol 3)

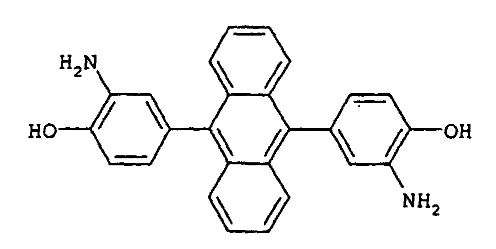

### 4,4'-Diamino-3,3'-dihydroxybiphenyl-(Bisaminophenol 4)

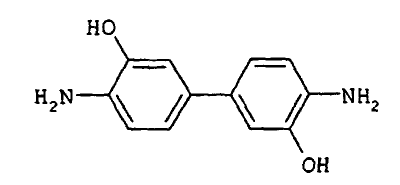

### 4,4'-Diacetoxy-3,3'-diamino-tetraphenylmethan-(Bisaminophenol 5)

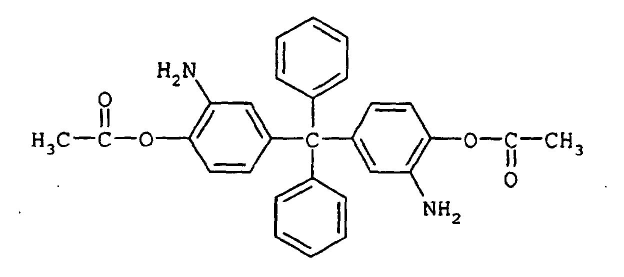

### Dicarbonsäurechlorid:

### Naphthalin-2,6-dicarbonsäurechlorid-(Dicarbonsäurechlorid 1)

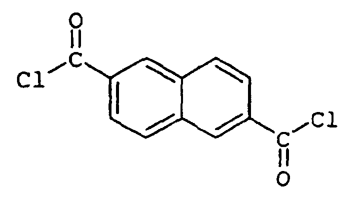

### Biphenyl-4,4'-dicarbonsäurechlorid-(Dicarbonsäurechlorid 2)

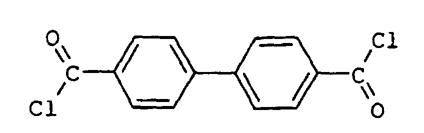

### Diphenylether-4,4'-dicarbonsäurechlorid-(Dicarbonsäurechlorid 3)

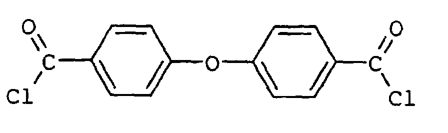

### Terephthalsäuredichlorid-(Dicarbonsäurechlorid 4)

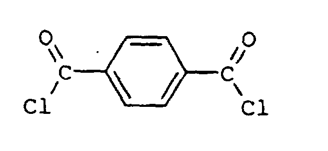

### 5-Phenylethinyl-isophthalsäurechlorid-(Dicarbonsäurechlorid 5)

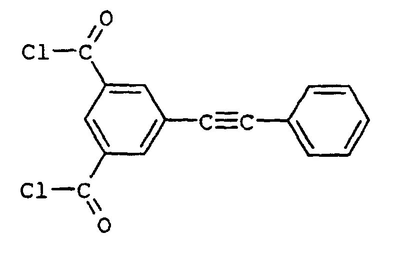

### 5-Allyloxy-isophthalsäuredichlorid-(Dicarbonsäurechlorid 6)

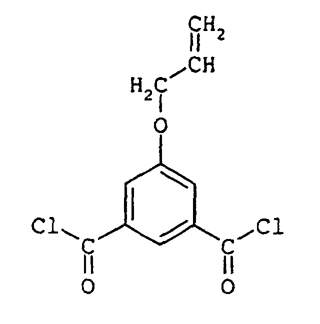

### Bisaminoverbindungen:

### Poly(propylenglycol)-bis-(2-aminopropylether) (Bisaminoverbindung 1)

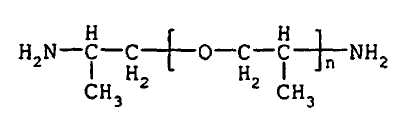

M = 4000 g/mol

### Bishydroxyverbindungen:

### UH-Carb 200 (UBE Industries, LTD.)-(Bishydroxyverbindung 1)

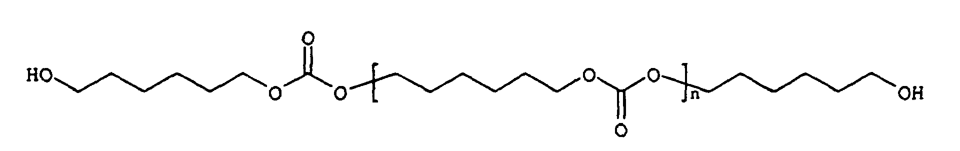

M = 2000 g/mol

### Poly[di(ethylen-glykol)phthalat]diol-(Bishydroxyverbindung 2)

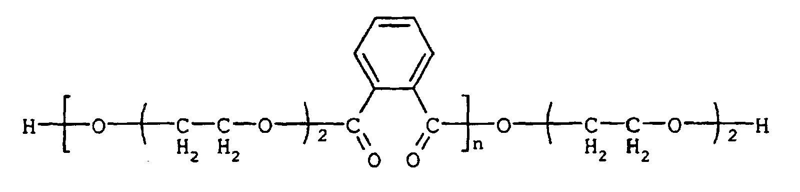

M = 814 g/mol

### Endcap:

### Methacrylsäurechlorid - (Endcap 1)

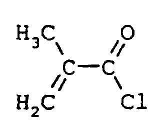

### 5-Norbornen-2-carbonsäurechlorid - (Endcap 2)

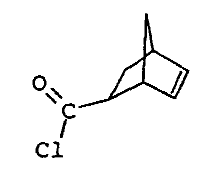

### 5-Norbornen-2,3-dicarbonsäureanhydrid - (Endcap 3)

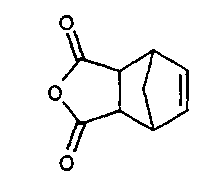

### Beispiel 1: Synthese von Polymer 1

38,21 g (0,1 mol) Bisaminophenol 1 werden in 300 ml dest. N-Methylpyrrolidon (NMP) gelöst. Zu dieser Lösung wird bei 10 °C unter Rühren eine Lösung von 23,93 g (0,095 mol) Dicarbonsäurechlorid 1 gelöst in 200 ml dest. NMP zugetropft. Es wird noch 1 Stunde bei 10 °C und anschließend 1 Stunde bei 20 °C gerührt. Nach erneutem Kühlen auf 10 °C wird zur Reaktionsmischung 1,64 g (0,01 mol) Endcap 3 gelöst in 50 ml dest. γ-Butyrolacton (γ-BL) zugetropft, 1 Stunde bei 10 °C und anschließend 1 Stunde bei 20 °C gerührt. Nach Kühlen auf 10 °C wird die Reaktionsmischung mit 19,76 g (0,25 mol) Pyridin gelöst in 30 ml dest. γ-BL versetzt, auf Raumtemperatur erwärmt und 2 Stunden gerührt.

Zur Isolierung des Polymers wird die Reaktionsmischung filtriert und das Filtrat in ein Gemisch aus 1 l vollentsalztem (VE) Wasser und 200 ml Isopropanol unter Rühren eingetropft, wobei während des Eintropfens noch weitere 3 l VE Wasser zugegeben werden. Das ausgefällte Polymer wird abgesaugt und mit 2 l kaltem VE Wasser gewaschen. Nach dem Absaugen wird das Polymer zweimal 1 Stunde bei Raumtemperatur in je 2,5 l einer 3%-igen Ammoniaklösung gerührt und anschließend abgesaugt. Das Polymer wird mit VE Wasser neutral gewaschen, abfiltriert und 72 Stunden bei 50 °C / 10 mbar getrocknet.

Das auf diese Weise hergestellte Polymer ist in Lösungsmitteln wie NMP, γ-BL, Cyclohexanon, Cyclopentanon oder Gemische davon gut löslich.

### Beispiel 2: Synthese von Polymer 2

36,3 g (0,095 mol) Bisaminophenol 1 werden in 300 ml dest. NMP gelöst. Zu dieser Lösung wird bei 10 °C unter Rühren eine Lösung von 27,8 g (0,1 mol) Dicarbonsäurechlorid 2 in 250 ml dest. γ-BL zugetropft. Es wird noch 1 Stunde bei 10 °C und anschließend 1 Stunde bei 20 °C gerührt. Nach erneutem Kühlen auf 10 °C wird zur Reaktionsmischung 80 g (0,02 mol) Bisaminoverbindung 1 gelöst in 200 ml dest. γ-BL zugetropft, 1 Stunde bei 10 °C und anschließend 1 Stunde bei 20 °C gerührt. Nach Kühlen auf 10 °C wird die Reaktionsmischung mit 25,28 g (0,25 mol) Triethylamin (TEA) gelöst in 50 ml dest. γ-BL versetzt, auf Raumtemperatur erwärmt und 2 Stunden gerührt.

Zur Isolierung des Polymers wird die Reaktionsmischung filtriert und das Filtrat in Cyclohexan oder ein Gemisch aus 4 l Cyclohexan und 2 l VE Wasser unter Rühren eingetropft und 12 h bei Raumtemperatur gerührt. Das sich an der Phasengrenze abscheidende Polymer wird abgesaugt und mit 2 l kaltem VE Wasser gewaschen. Nach dem Absaugen wird das Polymer zweimal 1 Stunde bei 50 °C in je 2,5 l VE Wasser gerührt und anschließend abgesaugt. Das Polymer wird mit VE Wasser gewaschen, abfiltriert und 72 Stunden bei 50 °C / 10 mbar getrocknet.

Das auf diese Weise hergestellte Polymer ist in Lösungsmitteln wie NMP, γ-BL, Cyclohexanon, Cyclopentanon, Diethylenglykolmonomethylether, Ethyllactat oder Gemische davon gut löslich.

### Beispiel 3: Synthese von Polymer 3

28,31 g (0,05 mol) Bisaminophenol 2 werden in 250 ml dest. NMP gelöst. Zu dieser Lösung wird bei 10 °C unter Rühren eine Lösung von 8,82 g (0,03 mol) Dicarbonsäurechlorid 3 und 3,53 g (0,0175 mol) Dicarbonsäurechlorid 4 in 150 ml dest. γ-BL zugetropft. Es wird noch 1 Stunde bei 10 °C und anschließend 1 Stunde bei 20 °C gerührt. Nach erneutem Kühlen auf 10 °C wird zur Reaktionsmischung 0,52 g (0,005 mol) Endcap 1 gelöst in 20 ml dest. γ-BL zugetropft, 1 Stunde bei 10 °C und anschließend 1 Stunde bei 20 °C gerührt. Nach Kühlen auf 10 °C wird die Reaktionsmischung mit 9,48 g (0,12 mol) Pyridin gelöst in 30 ml dest. γ-BL versetzt, auf Raumtemperatur erwärmt und 2 Stunden gerührt.

Die Isolierung und Aufarbeitung des Polymers 3 erfolgte analog Beispiel 1.

### Beispiel 4: Synthese von Polymer 4

53,79 g (0,095 mol) Bisaminophenol 2 werden in 400 ml dest. NMP gelöst. Zu dieser Lösung wird bei 10 °C unter Rühren eine Lösung von 15,1 g (0,05 mol) Dicarbonsäurechlorid 5 und 12,9 g (0,05 mol) Dicarbonsäurechlorid 6 in 200 ml dest. γ-BL zugetropft. Es wird noch 1 Stunde bei 10 °C und anschließend 1 Stunde bei 20 °C gerührt. Nach erneutem Kühlen auf 10 °C wird zur Reaktionsmischung 40 g (0,02 mol) Bishydroxyverbindung 1 gelöst in 100 ml dest. γ-BL zugetropft, 1 Stunde bei 10 °C und anschließend 1 Stunde bei 20 °C gerührt. Nach Kühlen auf 10 °C wird die Reaktionsmischung mit 15,17 g (0,15 mol) TEA gelöst in 50 ml dest. γ-BL versetzt, auf Raumtemperatur erwärmt und 2 Stunden gerührt.

Die Isolierung und Aufarbeitung des Polymers 4 erfolgte analog Beispiel 2.

### Beispiel 5: Synthese von Polymer 5

19,11 g (0,05 mol) Bisaminophenol 1 werden in 250 ml dest. NMP gelöst. Zu dieser Lösung wird bei 10 °C unter Rühren eine Lösung von 5,56 g (0,02 mol) Dicarbonsäurechlorid 2 in 80 ml dest. γ-BL zugetropft. Es wird noch 1 Stunde bei 10 °C und anschließend 1 Stunde bei 20 °C gerührt. Es wird auf 10 °C abgekühlt und 5,55 g (0,0275 mol) Dicarbonsäurechlorid 4 gelöst in 80 ml dest. γ-BL zugetropft. Es wird noch 1 Stunde bei 10 °C und anschließend 1 Stunde bei 20 °C gerührt. Nach erneutem Kühlen auf 10 °C wird zur Reaktionsmischung 0,78 g (0,005 mol) Endcap 2 gelöst in 20 ml dest. γ-BL zugetropft, 1 Stunde bei 10 °C und anschließend 1 Stunde bei 20 °C gerührt. Nach Kühlen auf 10 °C wird die Reaktionsmischung mit 11,85 g (0,15 mol) Pyridin gelöst in 50 ml dest. γ-BL versetzt, auf Raumtemperatur erwärmt und 2 Stunden gerührt.

Die Isolierung und Aufarbeitung des Polymers 5 erfolgte analog Beispiel 1.

### Beispiel 6: Synthese des Polymers 6

37,25 g (0,095 mol) Bisaminophenol 3 werden in 400 ml dest. NMP gelöst. Zu dieser Lösung wird bei 10 °C unter Rühren eine Lösung von 15,12 g (0,06 mol) Dicarbonsäurechlorid 1 in 150 ml dest. NMP zugetropft. Es wird noch 1 Stunde bei 10 °C und anschließend 1 Stunde bei 20 °C gerührt. Es wird auf 10 °C abgekühlt und 10,32 g (0,04 mol) Dicarbonsäurechlorid 6 gelöst in 100 ml dest. γ-BL zugetropft. Es wird noch 1 Stunde bei 10 °C und anschließend 1 Stunde bei 20 °C gerührt. Nach erneutem Kühlen auf 10 °C wird zur Reaktionsmischung 16,28 g (0,02 mol) Bishydroxyverbindung 2 gelöst in 80 ml dest. γ-BL zugetropft, 1 Stunde bei 10 °C und anschließend 1 Stunde bei 20 °C gerührt. Nach Kühlen auf 10 °C wird die Reaktionsmischung mit 25,28 g (0,25 mol) TEA gelöst in 80 ml dest. γ-BL versetzt, auf Raumtemperatur erwärmt und 2 Stunden gerührt.

Die Isolierung und Aufarbeitung des Polymers 6 erfolgte analog Beispiel 2.

### Beispiel 7: Synthese des Polymers 7

28,31 g (0,05 mol) Bisaminophenol 2 und 23,31 g (0,05 mol) Bisaminophenol 5 werden in 500 ml dest. NMP gelöst. Zu dieser Lösung wird bei 10 °C unter Rühren eine Lösung von 27,93 g (0,095 mol) Dicarbonsäurechlorid 3 in 150 ml dest. γ-BL zugetropft. Es wird noch 1 Stunde bei 10 °C und anschließend 1 Stunde bei 20 °C gerührt. Nach erneutem Kühlen auf 10 °C wird zur Reaktionsmischung 1,64 g (0,01 mol) Endcap 3 gelöst in 20 ml dest. γ-BL zugetropft, 1 Stunde bei 10 °C und anschließend 1 Stunde bei 20 °C gerührt. Nach Kühlen auf 10 °C wird die Reaktionsmischung mit 19,76 g (0,25 mol) Pyridin gelöst in 50 ml dest. γ-BL versetzt, auf Raumtemperatur erwärmt und 2 Stunden gerührt.

Die Isolierung und Aufarbeitung des Polymers 7 erfolgte analog Beispiel 1.

### Beispiel 8: Synthese des Polymers 8

33,97 g (0,06 mol) Bisaminophenol 2 und 15,68 g (0,04 mol) Bisaminophenol 3 werden in 500 ml dest. NMP gelöst. Zu dieser Lösung wird bei 10 °C unter Rühren eine Lösung von 14,7 g (0,05 mol) Dicarbonsäurechlorid 3 und 13,59 g (0,045 mol) Dicarbonsäurechlorid 5 gelöst in 250 ml dest. γ-BL zugetropft. Es wird noch 1 Stunde bei 10 °C und anschließend 1 Stunde bei 20 °C gerührt. Nach erneutem Kühlen auf 10 °C wird zur Reaktionsmischung 1,56 g (0,01 mol) Endcap 2 gelöst in 50 ml dest. γ-BL zugetropft, 1 Stunde bei 10 °C und anschließend 1 Stunde bei 20 °C gerührt. Nach Kühlen auf 10 °C wird die Reaktionsmischung mit 19,76 g (0,25 mol) Pyridin gelöst in 50 ml dest. γ-BL versetzt, auf Raumtemperatur erwärmt und 2 Stunden gerührt.

Die Isolierung und Aufarbeitung des Polymers 8 erfolgte analog Beispiel 1.

### Beispiel 9: Synthese des Polymers 9

24,84 g (0,065 mol) Bisaminophenol 1 und 6,48 g (0,03 mol) Bisaminophenol 4 werden in 400 ml dest. NMP gelöst. Zu dieser Lösung wird bei 10 °C unter Rühren eine Lösung von 15,12 g (0,06 mol) Dicarbonsäurechlorid 1 und 12,64 g (0,04 mol) Dicarbonsäurechlorid 2 in 200 ml dest. γ-BL zugetropft. Es wird noch 1 Stunde bei 10 °C und anschließend 1 Stunde bei 20 °C gerührt. Nach erneutem Kühlen auf 10 °C wird zur Reaktionsmischung 80 g (0,02 mol) Bisaminoverbindung 1 gelöst in 150 ml dest. γ-BL zugetropft, 1 Stunde bei 10 °C und anschließend 1 Stunde bei 20 °C gerührt. Nach Kühlen auf 10 °C wird die Reaktionsmischung mit 25,28 g (0,25 mol) TEA gelöst in 80 ml dest. γ-BL versetzt, auf Raumtemperatur erwärmt und 2 Stunden gerührt.

Die Isolierung und Aufarbeitung des Polymers 9 erfolgte analog Beispiel 2.

### Beispiel 10: Synthese des Polymers 10

23,53 g (0,06 mol) Bisaminophenol 3 werden in 250 ml dest. NMP gelöst. Zu dieser Lösung wird bei 10 °C unter Rühren eine Lösung von 11,11 g (0,055 mol) Dicarbonsäurechlorid 1 in 80 ml dest. γ-BL zugetropft. Es wird noch 1 Stunde bei 10 °C und anschließend 1 Stunde bei 20 °C gerührt. Es wird auf 10 °C abgekühlt und 8,64 g (0,04 mol) Bisaminophenol 4 gelöst in 80 ml dest. NMP zugetropft. Es wird noch 1 Stunde bei 10 °C und anschließend 1 Stunde bei 20 °C gerührt. Es wird wieder auf 10 °C abgekühlt und 12,08 g (0,04 mol) Dicarbonsäurechlorid 5 gelöst in 80 ml dest. γ-BL zugetropft. Es wird noch 1 Stunde bei 10 °C und anschließend 1 Stunde bei 20 °C gerührt. Nach erneutem Kühlen auf 10 °C wird zur Reaktionsmischung 1,04 g (0,01 mol) Endcap 1 gelöst in 20 ml dest. γ-BL zugetropft, 1 Stunde bei 10 °C und anschließend 1 Stunde bei 20 °C gerührt. Nach Kühlen auf 10 °C wird die Reaktionsmischung mit 19,76 g (0,25 mol) Pyridin gelöst in 50 ml dest. γ-BL versetzt, auf Raumtemperatur erwärmt und 2 Stunden gerührt.

Die Isolierung und Aufarbeitung des Polymers 10 erfolgte analog Beispiel 1.

### Beispiel 11: Bestimmung der Thermostabilitäten

Alle dargestellten Polymere zeigen thermische Stabilitäten von > 490 °C nach TGA-Untersuchungen (Gerät: STA 1500 der Firma Rheometric Scientific, Aufheizrate: 5K/min, Schutzgas: Argon). Der isotherme Masseverlust pro Stunde (bei 425 °C) beträgt < 0,6%.

Damit erfüllen die dargestellten Polymere die Anforderungen für die eingangs angegebenen Applikationen.

### Beispiel 12: Herstellung von Polymerlösungen

25 g der in den Beispielen 1 bis 10 dargestellten Polymere werden in 75 g dest. NMP (VLSI-Selectipur®) oder dest. γ-BL (VLSI-Selectipur®) gelöst. Der Lösevorgang erfolgt zweckmäßig auf einer Rüttelapparatur bei Raumtemperatur. Anschließend wird die Lösung durch einen 0.2 µm Filter in ein gereinigtes, partikelfreies Probenglas druckfiltriert. Die Viskosität der Polymerlösung kann durch Variation der gelösten Masse an Polymer verändert werden.

### Beispiel 13: Verbesserung der Haftung durch Haftvermittlerlösungen

Durch Verwendung von Haftvermittlern kann die Haftung der Polymere auf in der Mikroelektronik relevanten Oberflächen wie z. B. Silizium, Siliziumoxid, Siliziumnitrid, Tantalnitrid, Glas oder Quarz verbessert werden.

Als Haftvermittler können z. B. folgende Verbindungen verwendet werden: 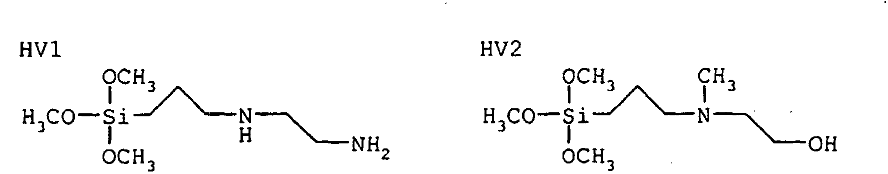 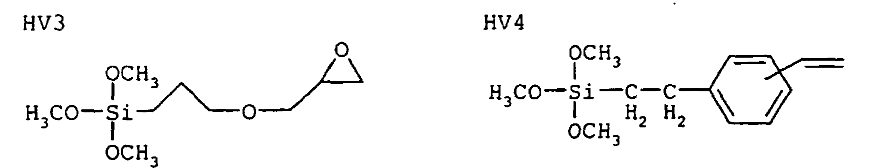 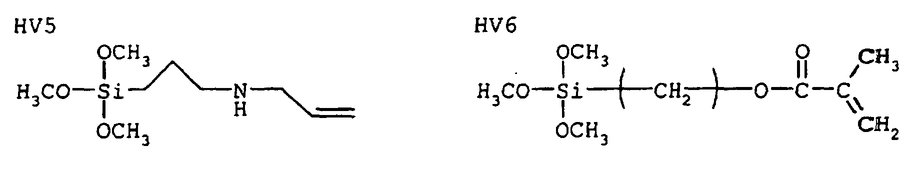 0,5 g Haftvermittler (z.B. N-(2-Aminoethyl)-3-aminopropylmethyldimethoxysilan) werden in ein gereinigtes, partikelfreies Probenglas bei Raumtemperatur in 95g Methanol, Ethanol oder Isopropanol (VLSI-Selectipur®) und 5g VE Wasser gelöst. Nach 24 h stehen bei Raumtemperatur ist die Haftvermittlerlösung einsatzbereit. Diese Lösung ist maximal 3 Wochen verwendbar.

Der Haftvermittler soll eine monomolekulare Schicht auf der Oberfläche der zu klebenden Teile ergeben. Der Haftvermittler kann zweckmäßigerweise durch Schleudertechnik aufgetragen werden. Dazu wird die Haftvermittlerlösung über ein 0,2 µm Vorfilter auf die zu klebende Fläche aufgetragen und 30s bei 5000 U/min geschleudert. Anschließend erfolgt ein Trocknungsschritt 60 s bei 100 °C.

### Beispiel 14: Auftragen eines Polymers durch Schleuderverfahren und Zyklisierung zum Polybenzoxazol

Ein prozessierter Siliziumwafer, der Stege und Gräben bis zu einer Minimaldimension von jeweils ca. 150 nm hat, wird, wie im Beispiel 13 beschrieben, mit dem Haftvermittler beschichtet. Danach wird die filtrierte Lösung des in Beispiel 1 erhaltenen Polymers 1 mittels einer Spritze auf den Wafer aufgetragen und mit einer Schleuder gleichmäßig verteilt. Die Schleuderumdrehungszahl beträgt dabei 2000 u/min. Anschließend wird das Polymer auf einer Heizplatte für 1 min. bei 120 °C und für 2 min. auf 200 °C erhitzt. Danach wird der beschichtete Wafer in einem Ofen unter Stickstoff oder Argon für 60 min. auf 425 °C erhitzt. Das so erhaltene Polybenzoxazol ist inert gegen Säuren, Basen und organische Lösemittel.

### Beispiel 15: Bestimmung der Haftung der Polymere auf einer Titannitrid-Schicht

Ein 4" Siliziumwafer wird mit einer 50 nm dicken Titannitridschicht besputtert. Auf diesen Wafer wird die in Beispiel 12 erhaltene Lösung des Polymers 1 aufgeschleudert, 5 s bei 500 U/min und 25 s bei 2000 U/min. Nach einem kurzen Softbake von 1 min. bei 120 °C auf einer Heizplatte werden 10 Siliziumchips der Größe 4x4 mm², die ebenfalls auf der Oberfläche mit 50 nm Titannitrid besputtert wurden, auf den Polymer-Film mit einer Kraft von 2N angedrückt. Anschließend wird dieser Stapel 1 h bei 425 °C in einem Ofen in einer Stickstoffatmosphäre getempert. Nach Abkühlung auf Raumtemperatur wird ein Haftungstest mittels eines Schertesters, Dage Serie 400, durchgeführt.

Der Mittelwert der Kraft für Polymer 1, der zum Abscheren der Chips benötigt wurde, liegt bei 17,84 N/mm².

### Beispiel 16: Bestimmung der Haftung der Polymere auf einer Tantalnitrid-Schicht

Beispiel 15 wurde wiederholt, wobei jedoch die Oberfläche des Wafers und der Chips nicht aus Titannitrid sondern aus Tantalnitrid bestand. Der Mittelwert der Kraft für Polymer 1, der zum Abscheren der Chips benötigt wurde, liegt bei 16,79 N/mm².

### Beispiel 17: Bestimmung der Haftung der Polymere auf Silizium

Beispiel 15 wurde wiederholt, wobei jedoch die Oberfläche des Wafers und der Chips nicht aus Titannitrid sondern aus Silizium bestand. Der Mittelwert der Kraft für Polymer 1, der zum Abscheren der Si-Chips benötigt wurde, liegt bei 18,27 N/mm².

### Beispiel 18: Bestimmung der Haftung der Polymere auf einer Siliziumnitrid-Schicht

Beispiel 15 wurde wiederholt, wobei jedoch die Oberfläche des Wafers und der Chips nicht aus Titannitrid sondern aus Siliziumnitrid bestand. Der Mittelwert der Kraft für Polymer 1, der zum Abscheren der Chips benötigt wurde, liegt bei 16,52 N/mm².

### Beispiel 19: Bestimmung der Haftung der Polymere auf einer Siliziumoxid-Schicht

Beispiel 15 wurde wiederholt, wobei jedoch die Oberfläche des Wafers und der Chips nicht aus Titannitrid sondern aus Siliziumoxid bestand. Der Mittelwert der Kraft für Polymer 1, der zum Abscheren der Chips benötigt wurde, liegt bei 17,88 N/mm².

### Beispiel 20: Bestimmung der Haftung der Polymere auf einer Siliziumcarbid-Schicht

Beispiel 15 wurde wiederholt, wobei jedoch die Oberfläche des Wafers und der Chips nicht aus Titannitrid sondern aus Siliziumcarbid bestand. Der Mittelwert der Kraft für Polymer 1, der zum Abscheren der Chips benötigt wurde, liegt bei 16,75 N/mm².

### Beispiel 21: Bestimmung der Haftung der Polymere auf einer Tantal-Schicht

Beispiel 15 wurde wiederholt, wobei jedoch die Oberfläche des Wafers und der Chips nicht aus Titannitrid sondern aus Tantal bestand. Der Mittelwert der Kraft für Polymer 1, der zum Abscheren der Chips benötigt wurde, liegt bei 16,20 N/mm².

### Beispiel 22: Bestimmung der Haftung der Polymere auf einer Titan-Schicht

Beispiel 15 wurde wiederholt, wobei jedoch die Oberfläche des Wafers und der Chips nicht aus Titannitrid sondern aus Titan bestand. Der Mittelwert der Kraft für Polymer 1, der zum Abscheren der Chips benötigt wurde, liegt bei 17,06 N/mm².

### Beispiel 23: Bestimmung der Haftung der Polymere auf einer Polyimid-Schicht

Beispiel 15 wurde wiederholt, wobei jedoch die Oberfläche des Wafers und der Chips nicht aus Titannitrid sondern aus Polyimid bestand. Der Mittelwert der Kraft für Polymer 1, der zum Abscheren der Chips benötigt wurde, liegt bei 18,04 N/mm².

### Beispiel 24: Vergleichsbeispiel Haftung

Ein Polymer, das analog Bsp. 1 von US 5,077,378 hergestellt wurde, wird wie in Bsp. 12 beschrieben in NMP gelöst. Mit dieser Lösung werden die Beispiele 15 bis 23 wiederholt, wobei anstelle der Lösung des Polymers 1 eine Lösung des Polymers aus der US 5,077,378 verwendet wird. Es werden folgende Mittelwerte bestimmt:

| | |
|---|---|
| Oberfläche Titannitrid: | 14,71 N/mm² |
| Oberfläche Tantalnitrid: | 15,69 N/mm² |
| Oberfläche Silizium: | 15,21 N/mm² |
| Oberfläche Siliziumnitrid | 14,03 N/mm² |
| Oberfläche Siliziumoxid | 14,94 N/mm² |
| Oberfläche Siliziumcarbid | 13,37 N/mm² |
| Oberfläche Tantal | 13,96 N/mm² |
| Oberfläche Titan | 14,07 N/mm² |
| Oberfläche Polyimid | 13,02 N/mm² |

### Beispiel 25: Bestimmung der chemischen Stabilität gegen organische Lösungsmittel

Auf drei 4" Siliziumwafern wurde das Polymer 1 aus 20 Gew.%-iger Lösung (Lösungsmittel NMP) aufgeschleudert, 5 s bei 500 U/min und 25 s bei 2000 U/min. Nach einem kurzen Softbake von 1 min. bei 120 °C und 2 min. bei 200 °C auf einer Heizplatte wurden die Wafer 1h bei 400 °C in einem Ofen in einer Stickstoffatmosphäre getempert. Nach Abkühlung auf Raumtemperatur wurde je ein beschichteter Wafer 5 h in NMP, in Aceton und in Toluol auf 50 °C erhitzt. Anschließend werden die Wafer 60 min bei 200 °C im Vakuum getrocknet und die Massedifferenz bestimmt. Es konnten keine Ablöseerscheinungen beobachtet werden.

| | | |
|---|---|---|
| Masseabnahme | NMP | 0,9% |
| | Aceton | 0,5% |
| | Toluol | 0,7% |

### Beispiel 26: Bestimmung der chemischen Stabilität gegen Säuren

Auf drei 4" Siliziumwafern wurde das Polymer 2 aus 20 Gew.%-iger Lösung (Lösungsmittel NMP) aufgeschleudert, 5 s bei 500 U/min und 25 s bei 2000 U/min. Nach einem kurzen Softbake von 1 min. bei 120 °C und 2 min. bei 200 °C auf einer Heizplatte wurden die Wafer 1 h bei 400 °C in einem Ofen in einer Stickstoffatmosphäre getempert. Nach Abkühlung auf Raumtemperatur wurde je ein beschichteter Wafer 5 h in konz. HCl, in 50%-ige Schwefelsäure und in Essigsäure auf 40 °C erhitzt. Anschließend wurden die Wafer 60 min bei 200 °C im Vakuum getrocknet und die Massedifferenz bestimmt. Es konnten keine Ablöseerscheinungen beobachtet werden.

| | | |
|---|---|---|
| Masseabnahme | konz. HCl | 0,5% |
| | 50 %ige H₂SO₄ | 0,6% |
| | Essigsäure | 0,2% |

### Beispiel 27: Bestimmung der chemischen Stabilität gegen Basen

Auf drei 4" Siliziumwafern wurde das Polymer 3 aus 20 Gew.%-iger Lösung (Lösungsmittel NM?) aufgeschleudert, 5 s bei 500 U/min und 25 s bei 2000 U/min. Nach einem kurzen Softbake von 1 min bei 120 °C und 2 min bei 200 °C auf einer Heizplatte wurden die Wafer 1 h bei 400 °C in einem Ofen in einer Stickstoffatmosphäre getempert. Nach Abkühlung auf Raumtemperatur wurde je ein beschichteter Wafer 5 h in 50 %-iger NaOH, in 47 %-iger KOH und in konz. Ammoniak auf 40 °C erhitzt. Anschließend wurden die Wafer 60 min bei 200 °C im Vakuum getrocknet und die Massedifferenz bestimmt. Es konnten keine Ablöseerscheinungen beobachtet werden.

| | | |
|---|---|---|
| Masseabnahme | 50 %ige NaOH | 0,9% |
| | 47 %ige KOH | 0,7% |
| | konz. Ammoniak | 0,1% |

### Beispiel 28: Bestimmung der Dielektrizitätskonstante von Polymer 1

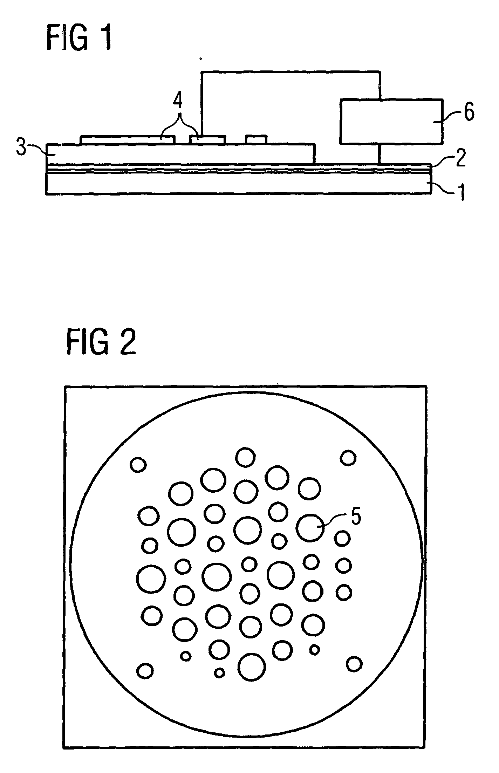

Der für die Bestimmung der Dielektrizitätskonstante verwendete Versuchsaufbau ist in Fig. 1 dargestellt. Das Polymer 1 wurde in NMP gelöst (25 %-ige Lösung) und die Lösung über eine Membran mit 0,2 µm Poren druckfiltriert. Diese Lösung wird auf ein Substrat 1, auf der sich bereits eine 600 nm dicke Ti-Schicht 2 befindet, aufgeschleudert. Die Schicht 3 wird bei 120 °C und 200 °C je 2 min. auf einer Heizplatte getrocknet und anschließend bei 430 °C, eine Stunde in einer Stickstoffatmosphäre getempert. Auf diese Schicht 3 werden anschließend über eine in Fig. 2 dargestellte Schattenmaske Titan-Elektroden 4 gesputtert. Die in Fig. 2 dargestellte Schattenmaske umfasst dazu Öffnungen 5, die in ihren Abmessungen und in ihrer Anordnung den Titan-Elektroden 4 entsprechen. Die Dielektrizitätskonstante wird mit dem Impedanzspektrometer 6 ermittelt und wird in einem Frequenzbereich von 100 Hz bis 1 MHz zu 2,47 bestimmt.

### Beispiel 29: Bestimmung der Dielektrizitätskonstante von Polymer 2

Die Bestimmung der Dielektrizitätskonstante von Polymer 2 erfolgte analog Beispiel 28 und ergab einen Wert von 2,58.

### Beispiel 30: Bestimmung der Dielektrizitätskonstante von Polymer 3

Die Bestimmung der Dielektrizitätskonstante von Polymer 3 erfolgte analog Beispiel 28 und ergab einen Wert von 2,63.

### Beispiel 31: Bestimmung der Dielektrizitätskonstante von Polymer 4

Die Bestimmung der Dielektrizitätskonstante von Polymer 4 erfolgte analog Beispiel 28 und ergab einen Wert von 2,51.

### Beispiel 32: Bestimmung der Dielektrizitätskonstante von Polymer 10

Die Bestimmung der Dielektrizitätskonstante von Polymer 10 erfolgte analog Beispiel 28 und ergab einen Wert von 2,49.

### Beispiel 33: Vergleichsbeispiel Dielektrizitätskonstante

Ein nach Beispiel 28 durchgeführter Versuch mit einem Polymer, hergestellt analog Bsp. 1 von US 5,077,378, ergab eine Dielektrizitätskonstante von 3,1 in dem Frequenzbereich von 100 Hz bis 1 MHz.

### Beispiel 34: Bestimmung der Wasseraufnahme

Auf ein 4" Siliziumwafer mit bekannter Masse wurde das Polymer 1 aus 20 Gew.%-iger Lösung (Lösungsmittel NMP) aufgeschleudert, 5 s bei 500 U/min und 25 s bei 3500 U/min. Nach einem kurzen Softbake von 1 min. bei 120 °C auf einer Heizplatte wird der Wafer 1h bei 400 °C in einem Ofen in einer Stickstoffatmosphäre getempert. Mittels einer Analysenwaage AT261 Delta Range wird die Masse an Polymer 1 ermittelt. Anschließend wird der beschichtete Wafer 10 h bei 80 °C in Wasser gelagert. Nach dem Abblasen des Wassers erfolgte eine weitere Gewichtsbestimmung. Aus der Massendifferenz wurde die prozentuale Wasseraufnahme bezogen auf die Masse an Polybenzoxazol berechnet.

Ermittelte Wasseraufnahme: 0,8%

### Beispiel 35: Damascene Struktur

Das Polymer 1 wurde in NMP gelöst (20 Gew.%-ige Lösung) und die Lösung über eine Membran mit 0,2 µm-Poren druckfiltriert. Die Lösung wird auf ein Silizium-Substrat mit 2500 U/min, 25 s aufgeschleudert, die Schicht 2 min bei 100 °C und anschließend 2 min bei 140 °C auf einer Heizplatte getrocknet. Durch den darauffolgenden Cure-Prozeß, 1h bei 400 °C unter Stickstoff, wird das Material in das entsprechende Polybenzoxazol umgewandelt. Auf diese ca. 700 nm dicke PBO-Schicht wird in einer PECVD-Anlage (Novellus Concept 1) eine 150 nm dicke SiO₂-Schicht als Hardmask abgeschieden. Diese Hardmask wird mittels Standardlithographie- und Ätztechniken strukturiert. Über die strukturierte Hardmask wird anschließend die PBO-Schicht in einer RIE-Anlage (Lam XL) im Sauerstoffplasma strukturiert. Nach Abscheiden einer TiN-Barriere, 10 nm in einer AMAT Endura 5500 und Aufbringen einer dünnen Haft- und Startschicht (50 nm Ti und 100 nm Cu) werden die Strukturen galvanisch mit Kupfer gefüllt (Novellus SABRE System). Das überstehende Kupfer wird anschließend in einem CMP-Prozeß zurückgeschliffen.

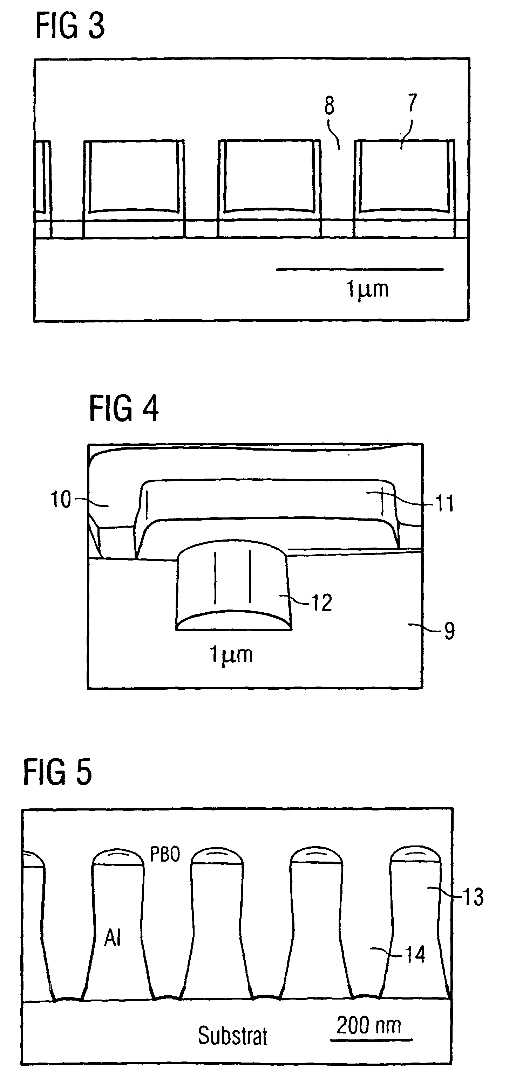

Aus dem so hergestellten Substrat wurde ein Bruch hergestellt, poliert und mit dem Rasterelektronenmikroskop (REM) untersucht. Die REM-Aufnahme ist in Fig. 3 dargestellt. Die Kupferlinien 7 sind im Polybenzoxazol 8 eingebettet, wobei die Strukturen des Polybenzoxazols 8 homogen, blasen- und rissfrei sind und keinerlei Haftungsprobleme zeigen. Die Kupferlinien 7 weisen eine Breite von 0,5 µm auf, während der Raum zwischen den Kupferlinien 7, der mit dem Polybenzoxazol 8 ausgefüllt ist, eine Breite von 0,3 µm aufweist.

### Beispiel 36: Damascene Struktur 2

Beispiel 35 wurde wiederholt, wobei anstelle des Polymers 1 jedoch Polymer 3 verwendet wurde. Auch hier erhält man haftfeste, blasen- und rissfreie Strukturen.

### Beispiel 37: Damascene Struktur 3

Beispiel 35 wurde wiederholt, wobei anstelle des Polymers 1 jedoch Polymer 4 verwendet wurde. Auch hier erhält man haftfeste, blasen- und rissfreie Strukturen.

### Beispiel 38: Damascene Struktur 4

Beispiel 35 wurde wiederholt, wobei anstelle des Polymers 1 jedoch Polymer 7 verwendet wurde. Auch hier erhält man das gleiche Ergebnis, haftfeste, blasen- und rissfreie Strukturen.

### Beispiel 39: Damascene Struktur 5

Beispiel 35 wurde wiederholt, wobei anstelle des Polymers 1 jedoch das Material aus EP 0264678 B1, Beispiel 1, verwendet wurde. Hier zeigen die Strukturen nach einer solchen Prozessfolge Risse und Haftungsprobleme.

### Beispiel 40: Dual Damascene Struktur 1

Polymer 1 wurde in NMP gelöst (20 Gew.%-ige Lösung) und die Lösung über eine Membran mit 0,2µm-Poren druckfiltriert. Die Lösung wird auf ein Silizium-Substrat mit 2500 U/min, 25s aufgeschleudert, die Schicht 2 min bei 100 °C und anschließend 2 min. bei 140 °C auf einer Heizplatte getrocknet. Durch den darauffolgenden Cure-Prozess, 1h bei 400 °C unter Stickstoff, wird das Material in das entsprechende Polybenzoxazol umgewandelt. Auf diese ca. 700 nm dicke PBO-Schicht wird anschließend eine 150 nm Siliziumoxid Schicht mittels einer PECVD-Anlage (Novellus Concept 1) als sog. Hardmask aufgebracht. Die Hardmask wird über einen Standardlithographieund einen Plasmaätzprozess strukturiert und der Fotoresist entfernt. Auf die strukturierte Hardmask wird eine zweite Schicht aus dem Polymer 1 aufgetragen. Die 20 %-ige Lösung des Polymers 1 wird bei 3000 U/min aufgeschleudert, je 2 min. bei 100 °C und 140 °C getrocknet und 1 h bei 400 °C getempert. Auf die zweite PBO-Schicht wird ebenfalls eine 150 nm dicke Siliziumdioxidschicht als Hardmask abgeschieden. Diese Schicht wird über eine Standardlithographie mit anschließendem Plasmaätzprozeß strukturiert. Die beiden PBO-Schichten werden dann in einer RIE-Anlage (Lam XL) im Sauerstoffplasma über die SiO₂-Masken strukturiert. Die dargestellte Struktur wurde im REM untersucht. Die Aufnahme ist in Fig. 4 dargestellt. Auf einer unteren Schicht 9 aus Polybenzoxazol ist eine obere Schicht 10 angeordnet, die ebenfalls aus Polybenzoxazol aufgebaut ist. In die beiden Schichten 9, 10 sind jeweils Vertiefungen eingeätzt, wobei die vertikale Flanken 11, 12 der Vertiefungen keine Unregelmäßigkeiten aufweisen und eine glatte Oberfläche besitzen.

### Beispiel 41: Dual Damascene Struktur 2

Beispiel 40 wurde wiederholt, wobei jedoch anstelle des Polymers 1 Polymer 3 verwendet wurde. Auch hier erhält man defektfreie Dual Damascene Strukturen mit vertikalen und glatten Seitenwänden.

### Beispiel 42: Dual Damascene Struktur 3

Beispiel 40 wurde wiederholt, wobei jedoch anstelle des Polymers 1 Polymer 8 verwendet wurde. Auch hier erhält man defektfreie Dual Damascene Strukturen mit vertikalen und glatten Seitenwänden.

### Beispiel 43: Dual Damascene Struktur 4

Beispiel 40 wurde wiederholt, wobei jedoch anstelle des Polymers 1 Polymer 10 verwendet wurde. Auch hier erhält man defektfreie Dual Damascene Strukturen mit vertikalen und glatten Seitenwänden.

### Beispiel 44: Füllen von engen Gräben

Das Polymer 1 wurde in NMP gelöst, (20 gew.%-ige Lösung) und die Lösung über eine Membran mit 0,2 µm Poren druckfiltriert. Diese Lösung wurde auf ein Substrat aufgeschleudert, auf dem sich bereits metallische Strukturen befanden. Nach Aufschleudern der Lösung wird die Schicht je 2 min bei 100 °C, 140 °C und 200 °C auf einer Heizplatte getrocknet und anschließend 1h bei 400 °C unter Stickstoff getempert. Die Metallstrukturen, die teilweise ein Aspektverhältnis über 4 haben, wobei der Abstand zwischen den Strukturen teilweise nur 120 nm beträgt, werden bei diesem Prozess elektrisch von einander isoliert. Aus dem dargestellten Substrat wurde ein Bruch hergestellt, poliert und mit dem Rasterelektronenmikroskop untersucht. Die Aufnahme ist in Fig. 5 dargestellt. Zwischen Linien 13 aus Aluminium sind Zwischenräume angeordnet, welche mit Polybenzoxazol 14 ausgefüllt sind. Das Polybenzoxazol zeigt keine Defekte.

### Beispiel 45: Füllen von engen Gräben 2

Beispiel 44 wurde wiederholt, wobei jedoch anstelle des Polymers 1 das Polymer 7 verwendet wurde. Auch hier werden die Gräben defektfrei gefüllt.

### Beispiel 46: Füllen von engen Gräben 3

Beispiel 44 wurde wiederholt, wobei jedoch anstelle des Polymers 1 das Polymer 9 verwendet wurde. Auch hier werden die Gräben defektfrei gefüllt.

## Patentansprüche

1. Poly-o-hydroxyamide der Formel I 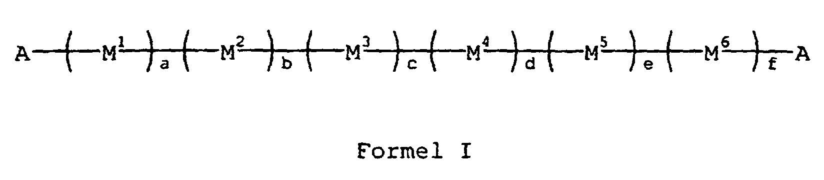 wobei bedeutet:
M¹: 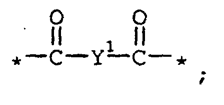
M²: 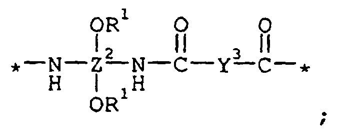
M³, M⁴, M⁵, jeweils unabhängig: 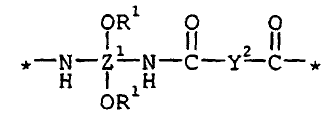 oder 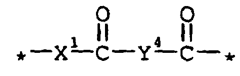 oder 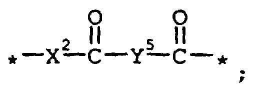
M⁶: 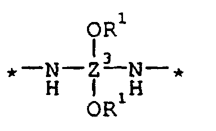
Z²: 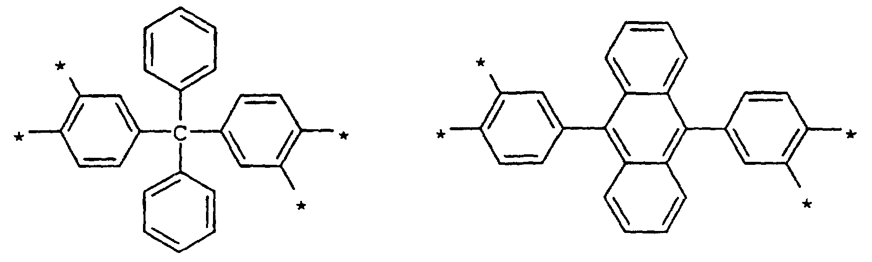 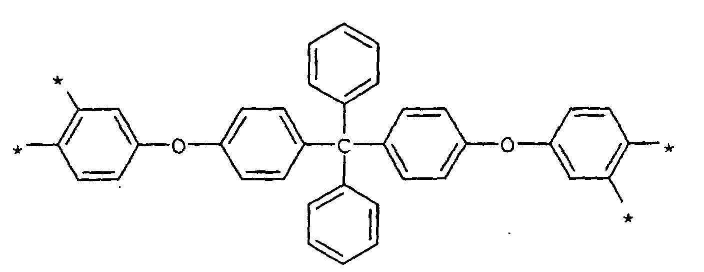 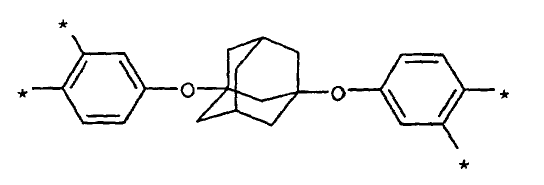 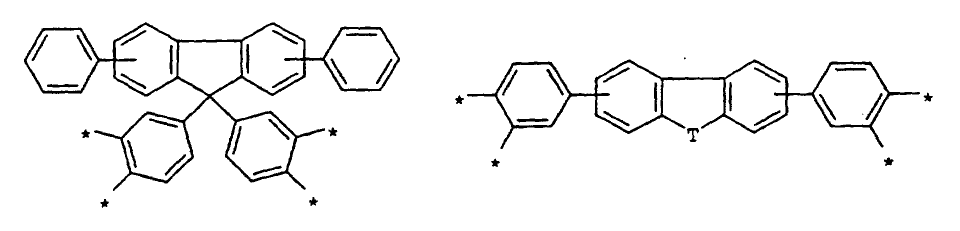 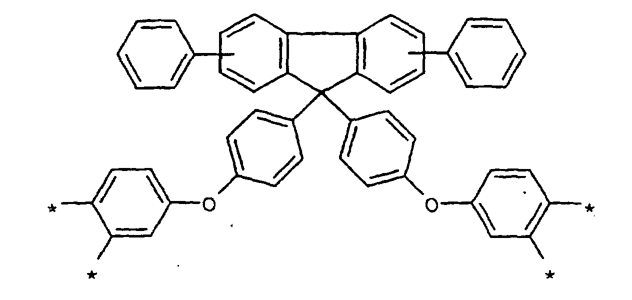 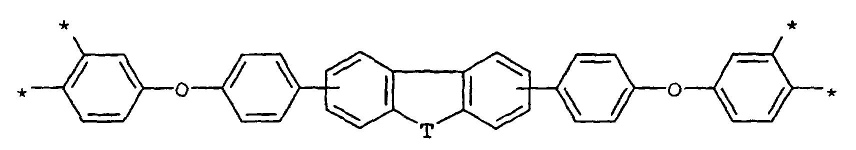
Z¹, Z³: jeweils unabhängig die gleiche Bedeutung wie für Z² angegeben, sowie weiter 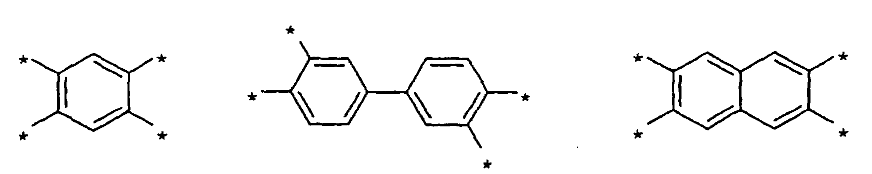 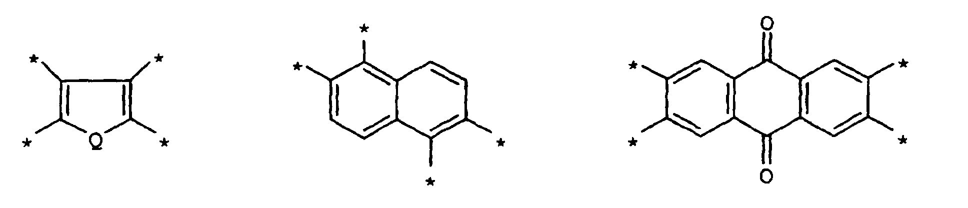 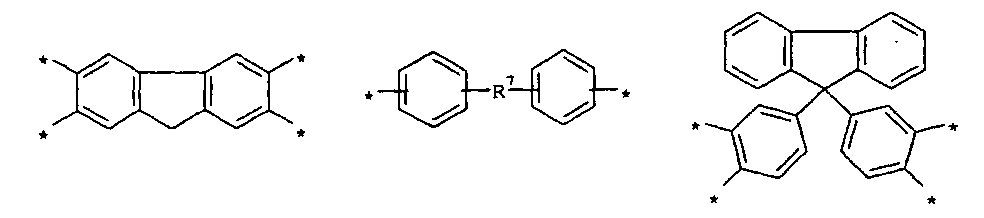 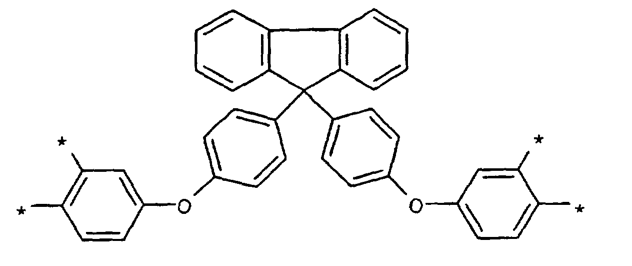
Y¹, Y², Y³, Y⁴, Y⁵,: 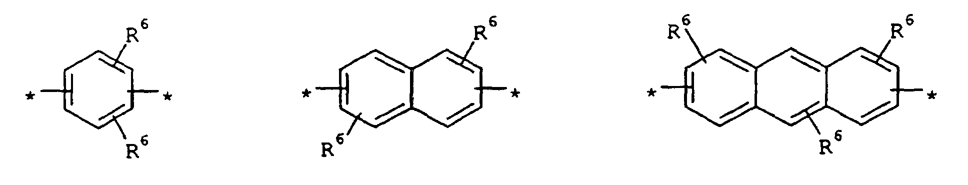 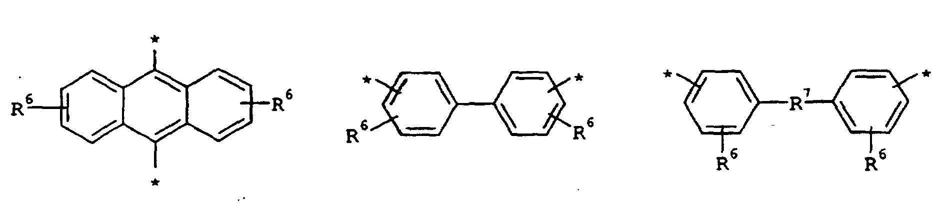 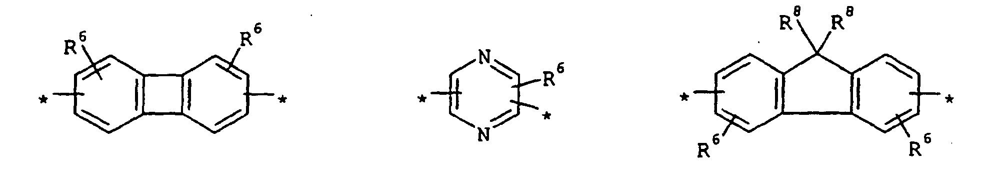 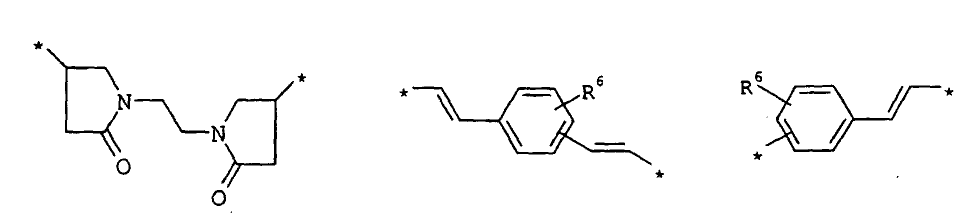 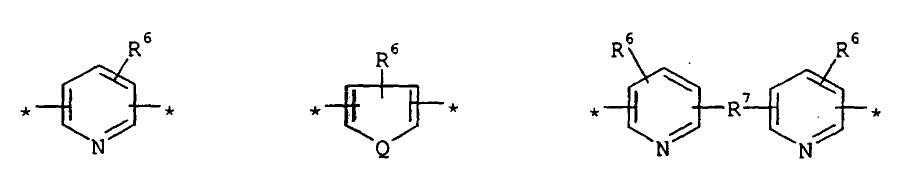 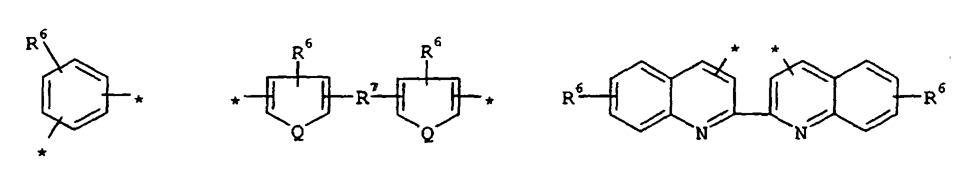 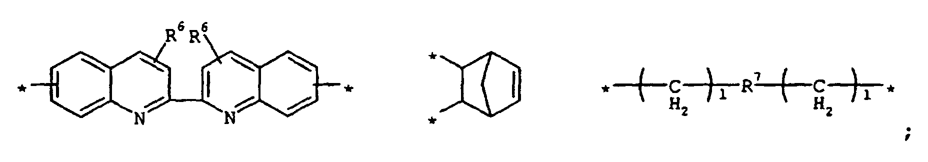
X¹, X², jeweils unabhängig: 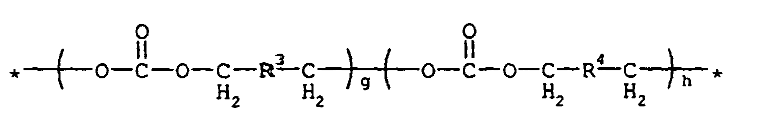 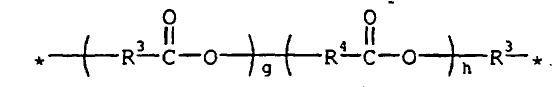 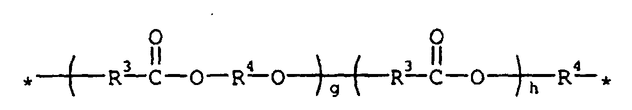 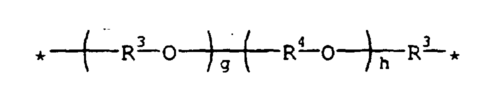 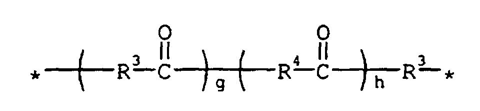 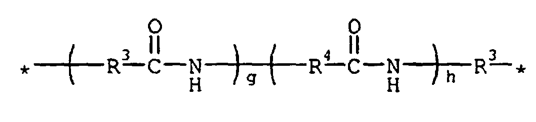
T: 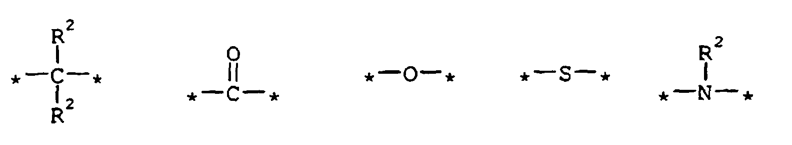
A: wenn a = 0 und/oder f = 1 ist 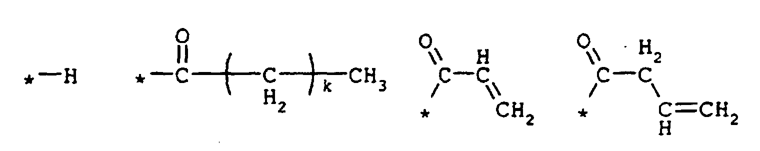 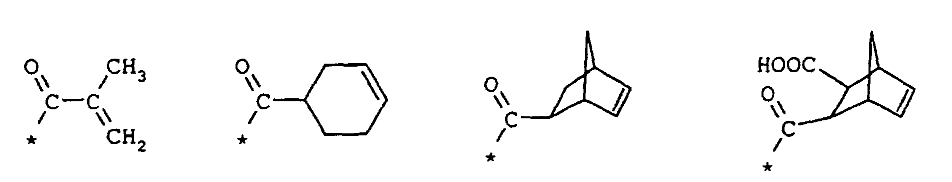 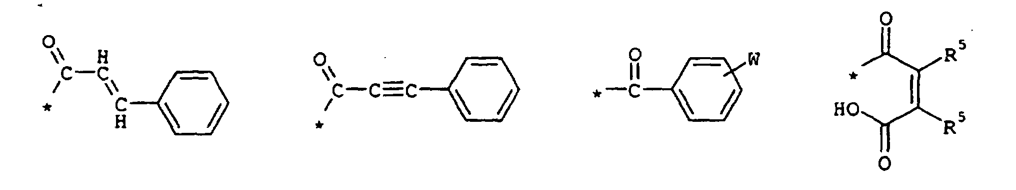 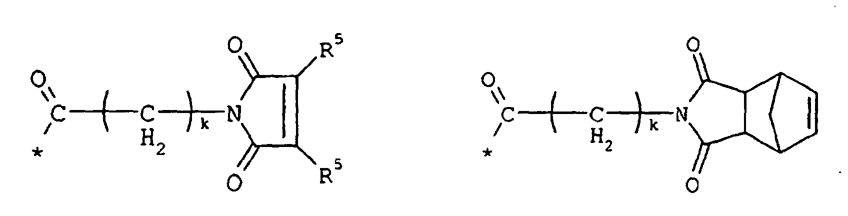 wenn a = 1 und/oder f = 0 ist A: 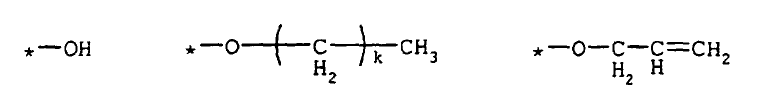 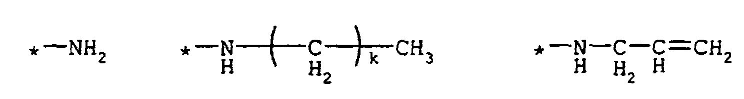 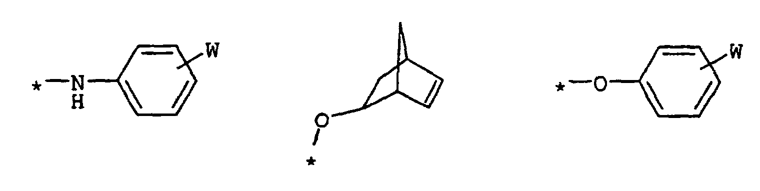
W: 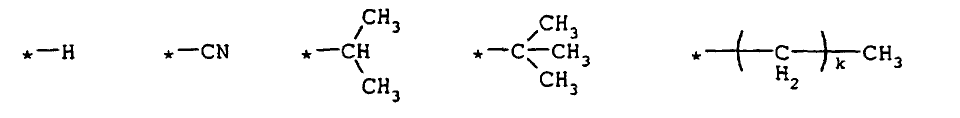 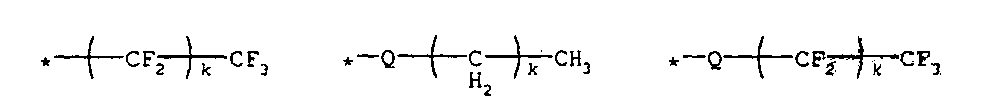 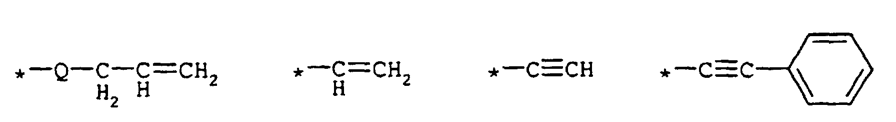 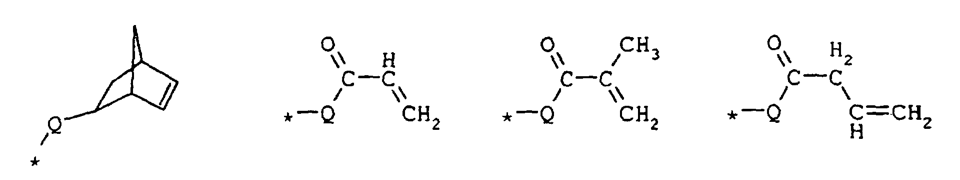 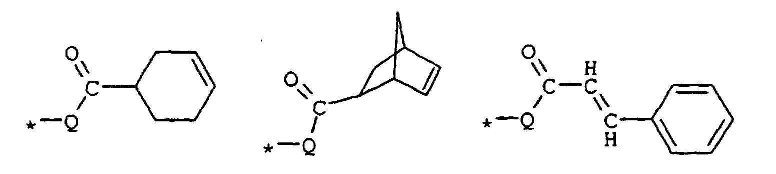 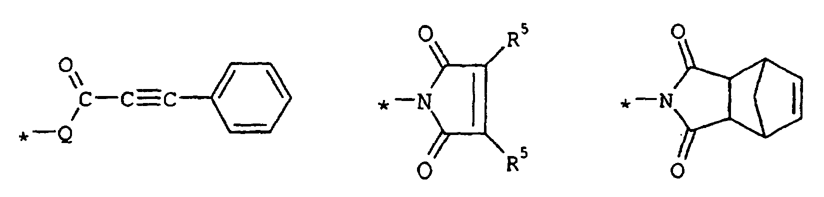 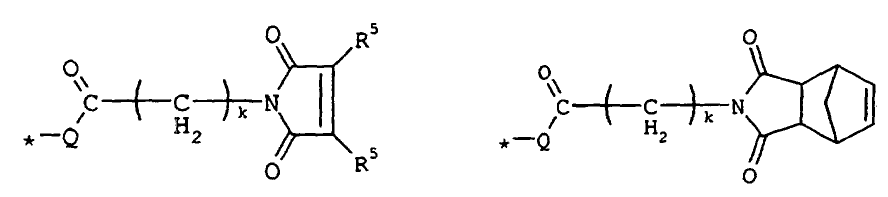
Q: 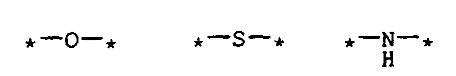
R¹: 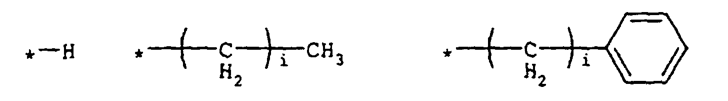 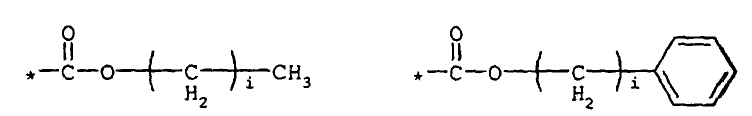
R²: -H, eine Alkylgruppe mit 1 bis 10 Kohlenstoffatomen, eine Aryl- oder eine Heteroarylgruppe
R³, R⁴: jeweils unabhängig eine substituierte oder unsubstituierte Alkylen-, Arylen- oder Cycloalkylengruppe;
R⁵: 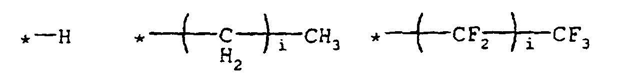 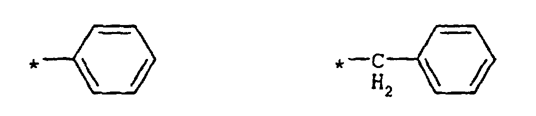
R⁶: -H, -CF₃, -OH, -SH, -COOH, -N(R²)₂, eine Alkyl-, Aryl- oder eine Heteroarylgruppe, sowie 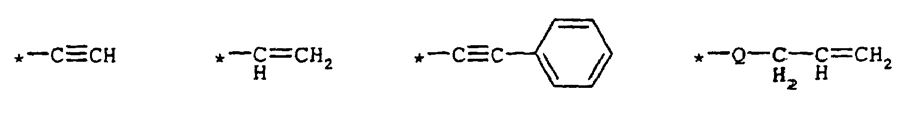 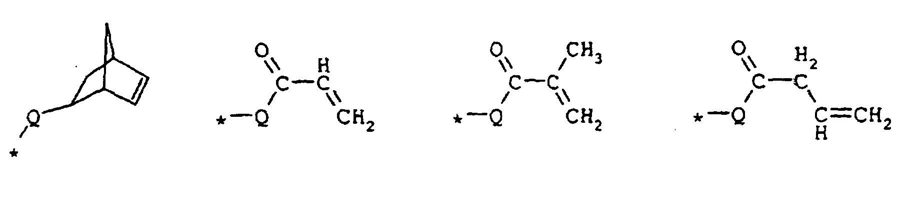 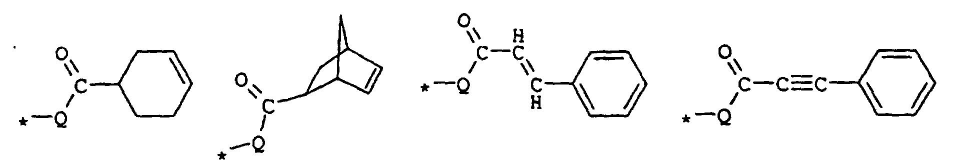 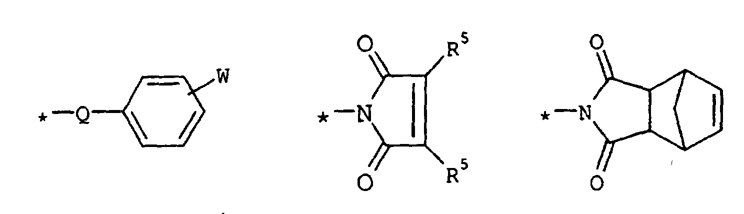 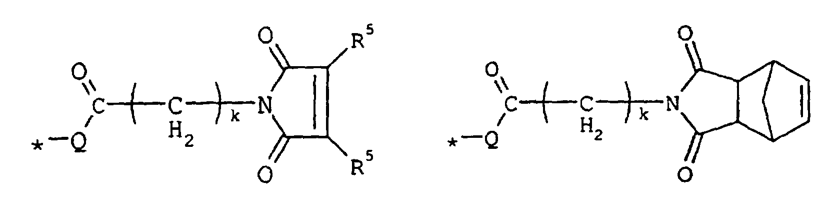
R⁷: -O-, -CO-, -NR⁴-, -S-, -SO₂-, -CH₂-, -S₂-, sowie 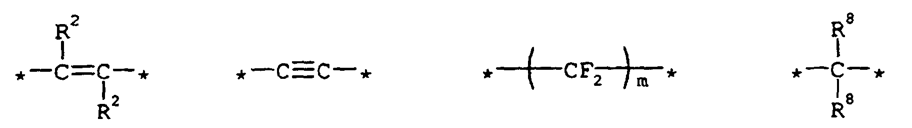 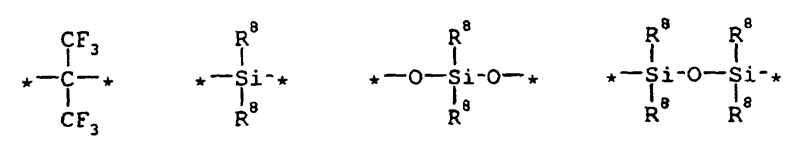 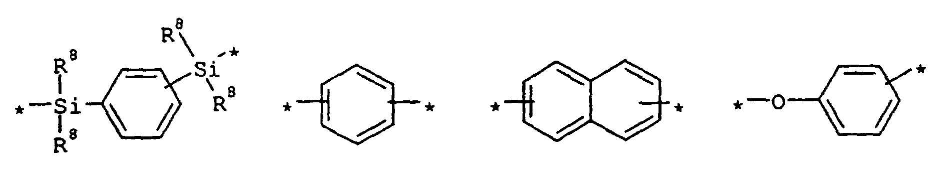 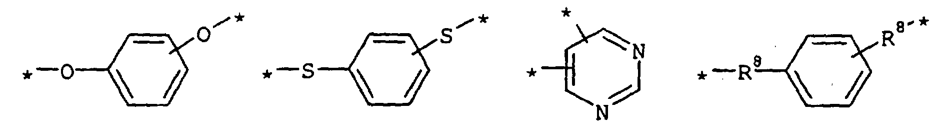 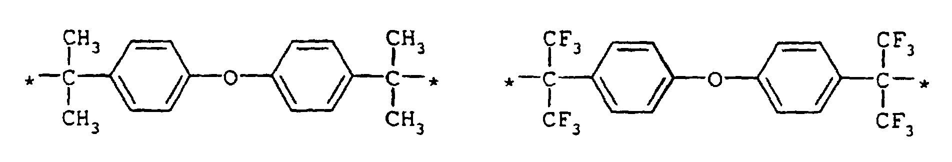 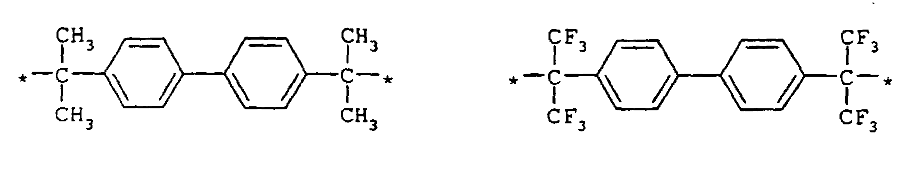
R⁸: eine Alkylgruppe mit 1 bis 10 Kohlenstoffatomen, eine Arylgruppe oder eine Heteroarylgruppe;
a: 0 oder 1;
b: 1 - 200;
c: 0 - 200;
d: 0 - 50;
e: 0 - 50;
f: 0 oder 1;
g: 0 - 100;
h: 0 - 100;
i: 0 - 10;
k: 0 - 10;
l: 1 - 10;
m: 1 - 10;
wobei g und h nicht gleichzeitig 0 sind und wenn R⁷ = -CH₂-ist l = 0 - 10.

2. Poly-o-hydroxyamide nach Anspruch 1, wobei mindestens eine der folgenden Bedingungen gilt:
b = 5 - 100;
c = 0 - 50;
d = 0 - 20;
e = 0 - 20.

3. Poly-o-hydroxyamide nach Anspruch 1 oder 2, wobei zumindest einer der Indices c, d und e ungleich Null ist.

4. Polybenzoxazole, erhalten aus Poly-o-hydroxyamiden der Formel I.

5. Verfahren zur Herstellung von Poly-o-hydroxyamiden der Formel I, wobei zumindest ein Monomer der Formel II 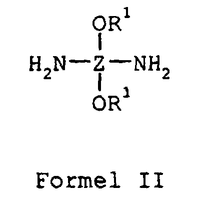 wobei Z steht für Z¹, Z² oder Z³, und Z¹, Z², Z³ sowie R¹ die in Anspruch 1 angegebene Bedeutung aufweisen,
mit zumindest einer Dicarbonsäure oder einem aktivierten Dicarbonsäurederivat der Formel III umgesetzt wird, 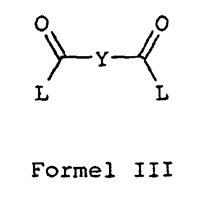 wobei L für eine Hydroxygruppe oder eine aktivierende Gruppe steht und Y für Y¹, Y², Y³, Y⁴, Y⁵ steht, und Y¹, Y², Y³, Y⁴, Y⁵ die in Anspruch 1 angegebene Bedeutung aufweisen.

6. Verfahren nach Anspruch 5, wobei die Umsetzung in Gegenwart einer Base durchgeführt wird.

7. Verfahren zur Herstellung von Polybenzoxazolen nach Anspruch 4, wobei Poly-o-hydroxyamide der Formel I erhitzt werden.

8. Elektronisches Bauteil, umfassend ein Dielektrikum, welches ein Polybenzoxazol nach Anspruch 4 enthält.

9. Verfahren zur Herstellung eines elektronischen Bauteils nach Anspruch 8, wobei eine Lösung eines Poly-o-hydroxyamids der Formel I in einem Lösungsmittel hergestellt wird, die Lösung auf ein Substrat aufgebracht und das Lösungsmittel verdampft wird, so dass ein Film erhalten wird, der Film erhitzt wird, um das Poly-o-hydroxyamid der Formel I zum Polybenzoxazol nach Anspruch 4 zu cyclisieren und der Film strukturiert wird, um eine Resiststruktur zu erhalten, welche Gräben aufweist, auf der Resiststruktur ein leitendes Material abgeschieden wird, so dass die Gräben mit dem leitenden Material ausgefüllt sind, und überschüssiges leitendes Material entfernt wird.

10. Verfahren zur Herstellung eines elektronischen Bauteils nach Anspruch 8, wobei eine Lösung eines Poly-o-hydroxyamids der Formel I in einem Lösungsmittel hergestellt wird, die Lösung auf ein Substrat aufgebracht wird, welches auf seiner Oberfläche metallische Strukturen aufweist, zwischen denen Gräben angeordnet sind, das Lösungsmittel verdampft wird, so dass die Gräben mit dem Poly-o-hydroxyamid der Formel I ausgefüllt sind, und das Substrat erhitzt wird, um das Poly-o-hydroxyamid der Formel I zum Polybenzoxazol nach Anspruch 4 zu cyclisieren.

## Claims

1. Poly-o-hydroxyamides of the formula I 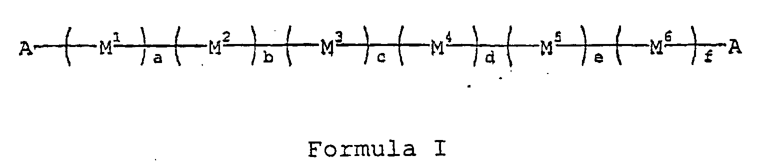 in which
M¹ is 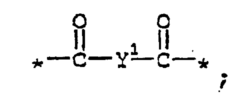
M² is 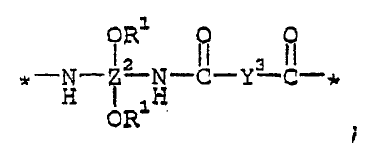
M³, M⁴ and M⁵, in each case independently, are 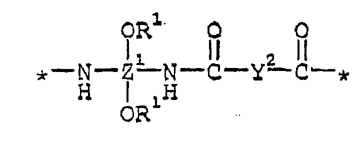 or 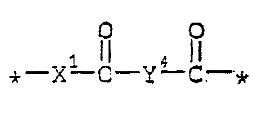 or 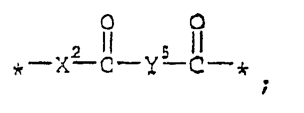
M⁶ is 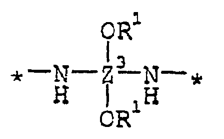
Z² is 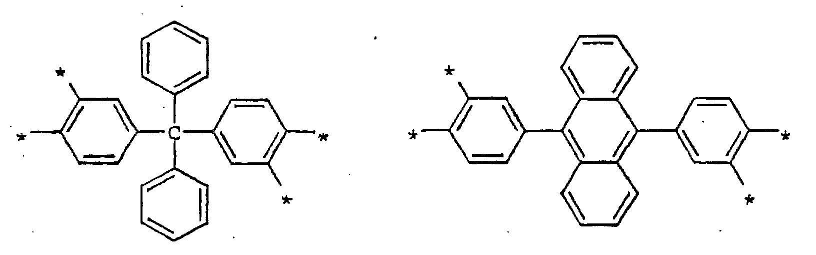 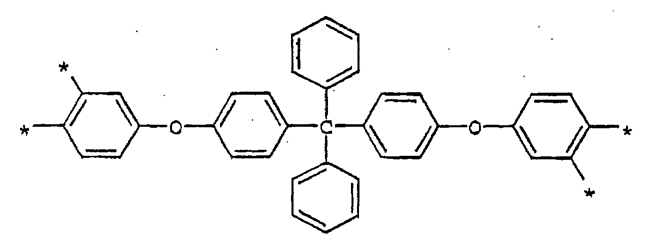 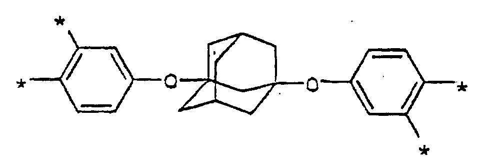 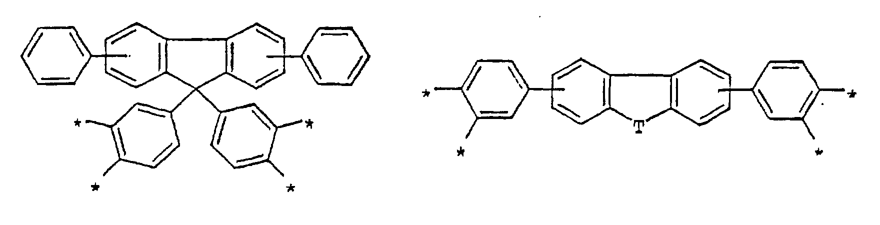 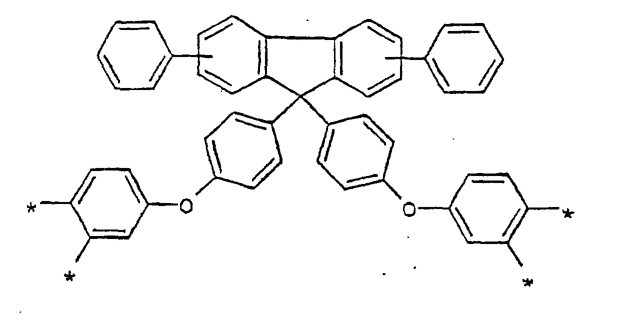 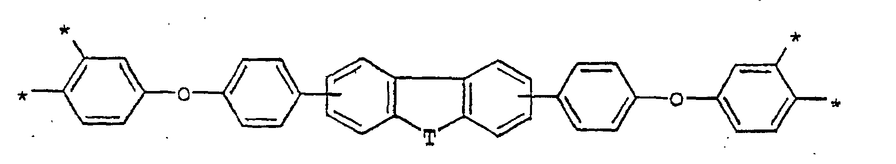
Z¹ and Z³, in each case independently, have the same meaning as stated for Z², and are furthermore 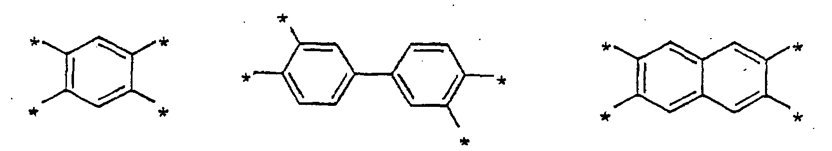 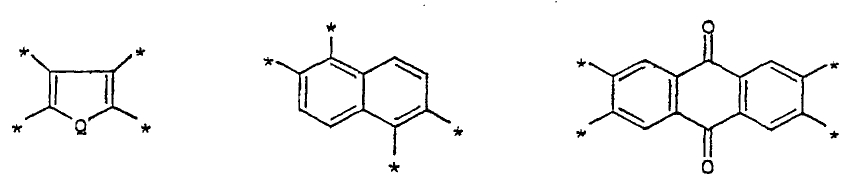 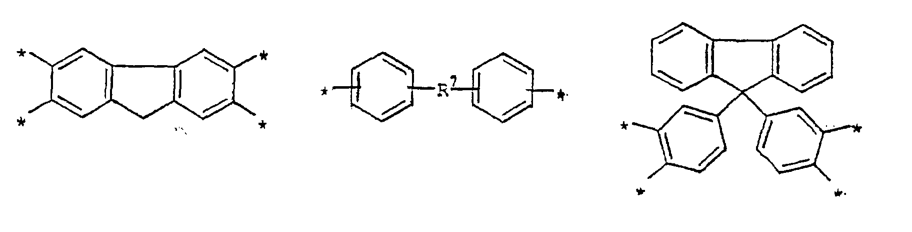 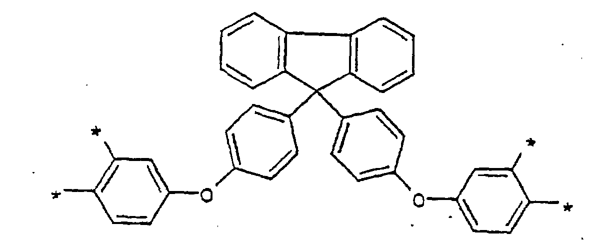
Y¹, Y², Y³, Y⁴ and Y⁵ are 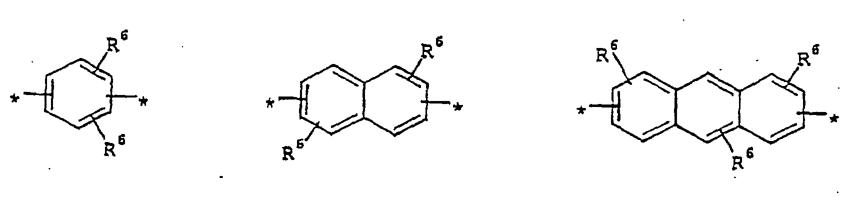 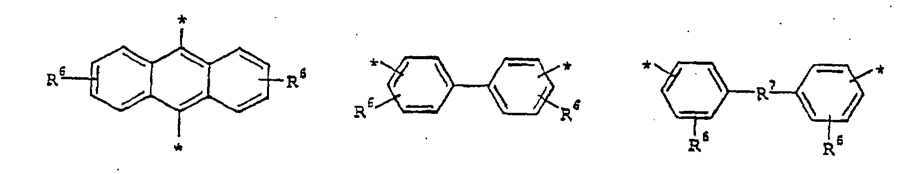 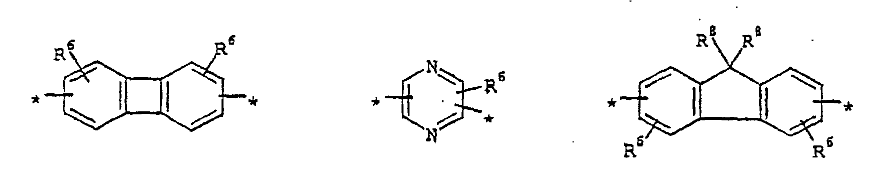 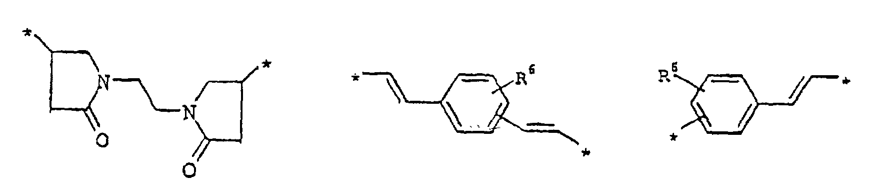 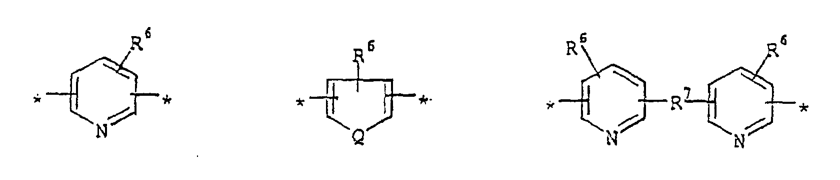 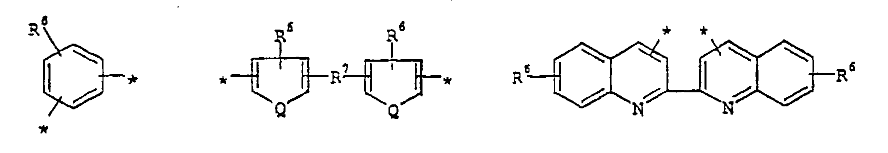 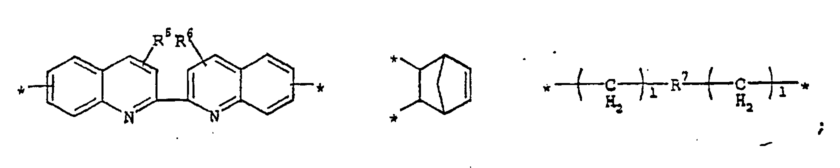
X¹ and X², in each case independently, are 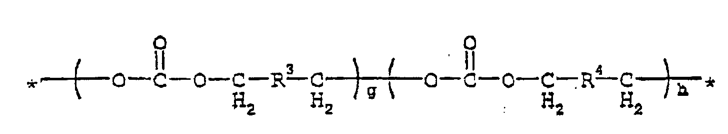 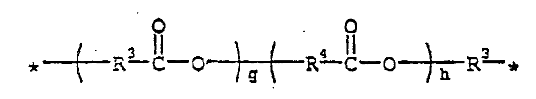 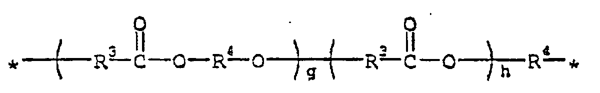 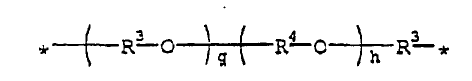 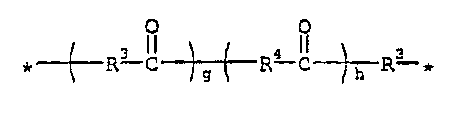 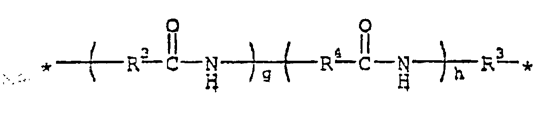
T is 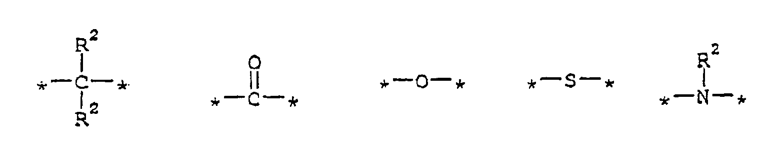
A, if a = 0 and/or f = 1, is 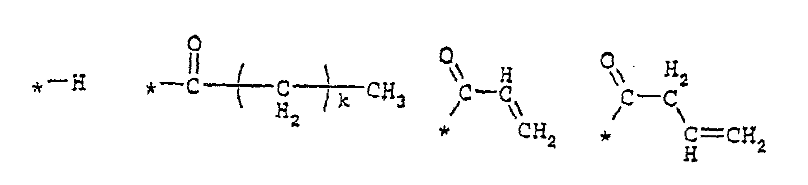 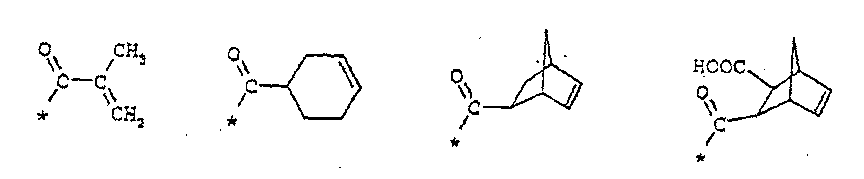 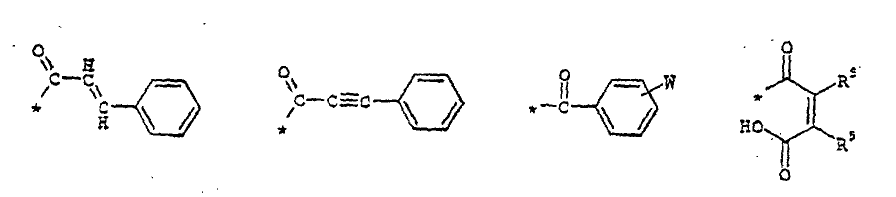 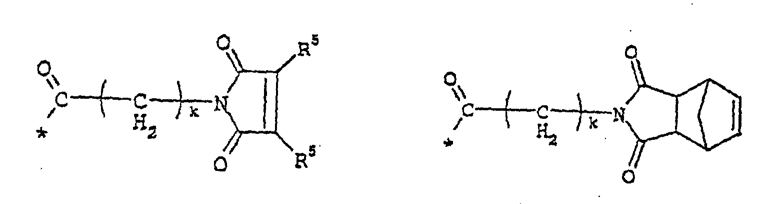 if a = 1 and/or f = 0, A is 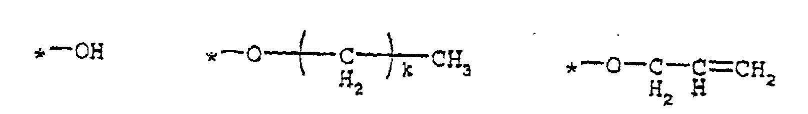 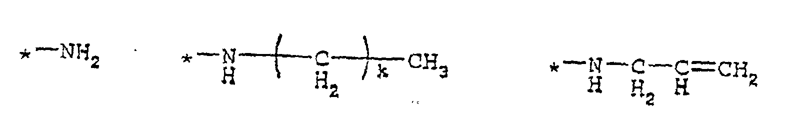 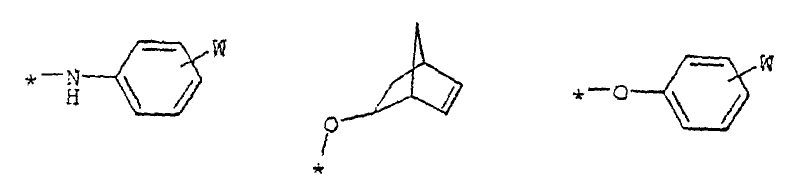
W is 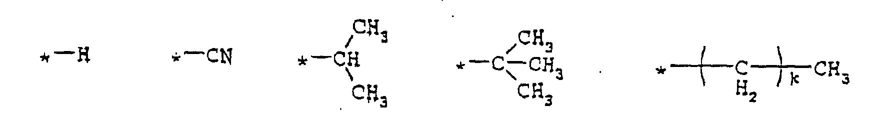 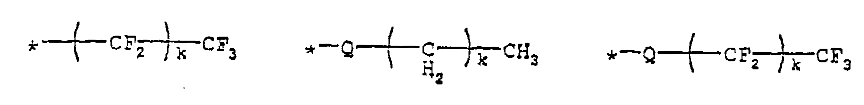 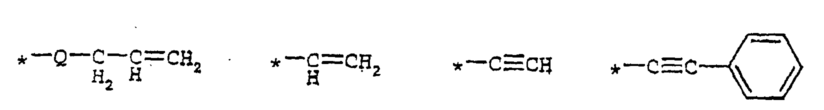 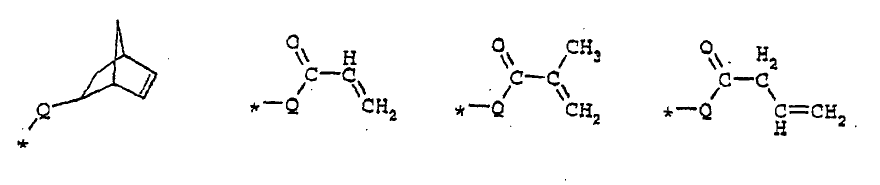 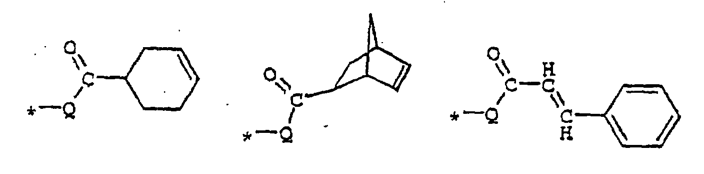 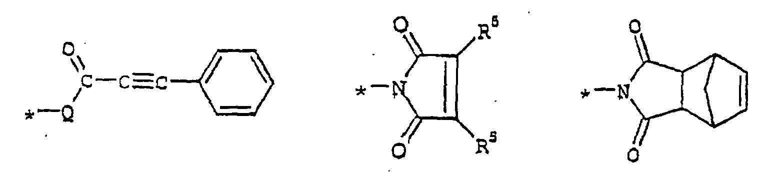 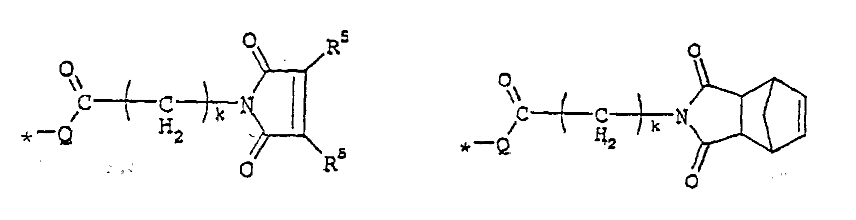
Q is 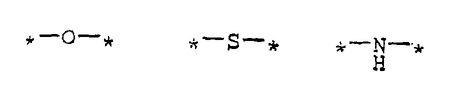
R¹ is 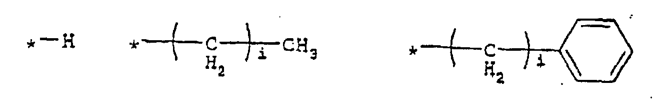 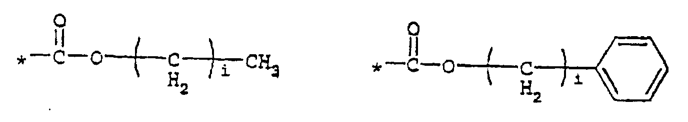
R² is -H, an alkyl group having 1 to 10 carbon atoms, an aryl group or a heteroaryl group;
R³ and R⁴, in each case independently, are a substituted or unsubstituted alkylene, arylene or cycloalkylene group;
R⁵ is 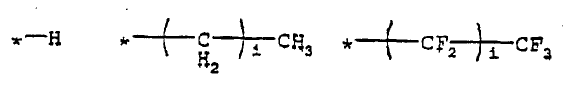 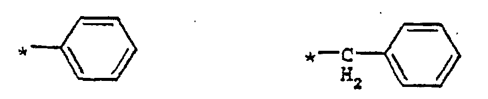
R⁶ is -H, -CF₃, -OH, -SH, -COOH, -N(R²)₂, an alkyl, aryl or heteroaryl group, and 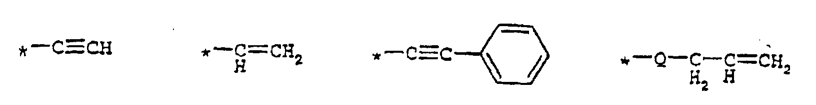 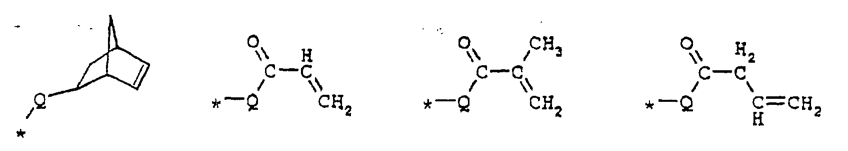 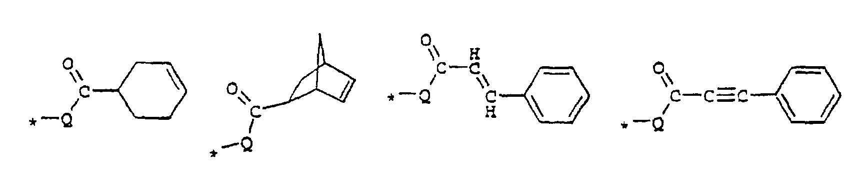 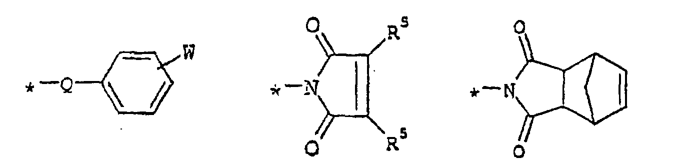 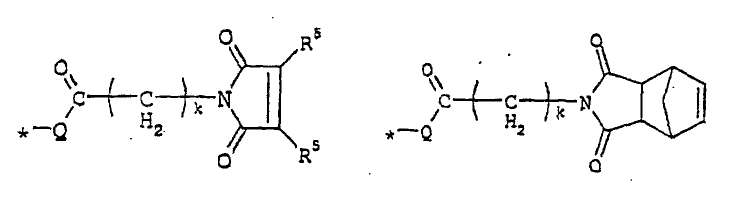
R⁷ is -O-, -CO-, -NR⁴-, -S-, -SO₂-, -CH₂-, -S₂- and 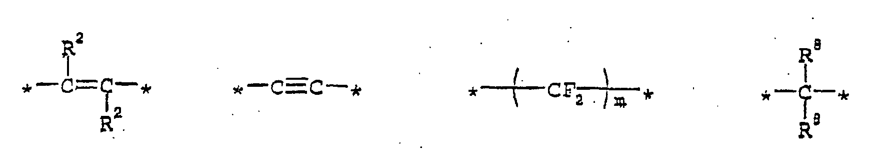 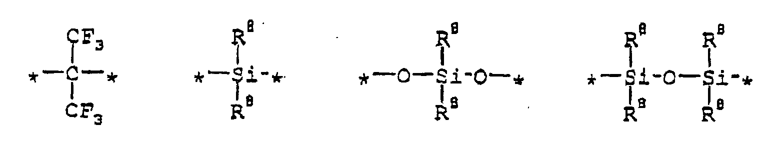 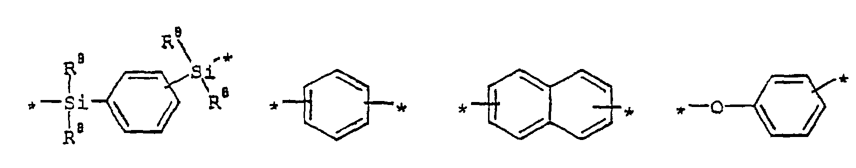 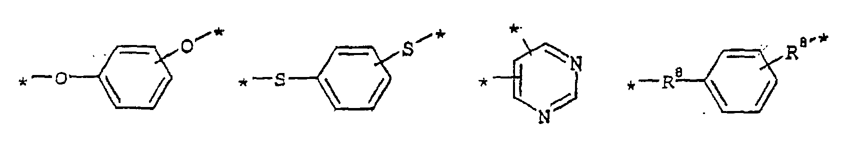 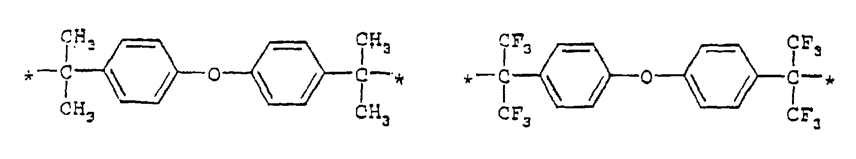 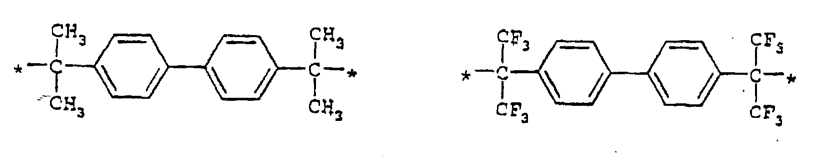
R⁸ is an alkyl group having 1 to 10 carbon atoms, an aryl group or a heteroaryl group;
a is 0 or 1;
b is 1 - 200;
c is 0 - 200;
d is 0 - 50;
e is 0 - 50;
f is 0 or 1;
g is 0 - 100;
h is 0 - 100;
i is 0 - 10;
k is 0 - 10;
l is 1 - 10;
m is 1 - 10;
g and h not simultaneously being 0 and, if R⁷ = -CH₂-, l = 0 - 10.

2. Poly-o-hydroxyamides Claim 1, wherein at least one of the following conditions applies:
b = 5 - 100;
c = 0 - 50;
d = 0 - 20;
e = 0 - 20.

3. Poly-o-hydroxyamides Claim 1 or 2, wherein at least one of the indices c, d and e is not equal to zero.

4. Polybenzoxazoles obtained from poly-o-hydroxyamides of the formula I.

5. Process for the preparation of poly-o-hydroxyamides of the formula I, wherein at least one monomer of the formula II 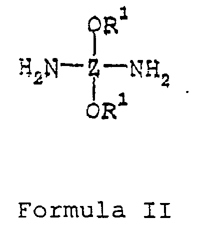 in which Z is Z¹, Z² or Z³, and Z¹, Z², Z³ and R¹ have the meaning stated in Claim 1,
is reacted with at least one dicarboxylic acid or one activated dicarboxylic acid derivative of the formula III 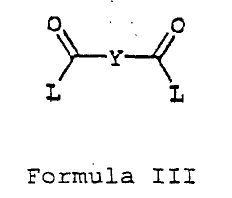 in which L is a hydroxyl group or an activating group, Y is Y¹, Y², Y³, Y⁴ or Y⁵, and Y¹, Y², Y³, Y⁴ and Y⁵ have the meaning stated in Claim 1.

6. Process according to Claim 5, wherein the reaction is carried out in the presence of a base.

7. Process for the preparation of polybenzoxazoles according to Claim 4, wherein poly-o-hydroxyamides of the formula I are heated.

8. Electronic component comprising a dielectric which contains a polybenzoxazole according to Claim 4.

9. Process for the production of an electronic component according to Claim 8, wherein a solution of a poly-o-hydroxyamide of the formula I in a solvent is prepared, the solution is applied to a substrate and the solvent is evaporated so that a film is obtained, the film is heated in order to cyclize the poly-o-hydroxyamide of the formula I to give the polybenzoxazole according to Claim 4, and the film is structured in order to obtain a resist structure which has trenches, a conductive material is deposited on the resist structure so that the trenches are filled with the conductive material, and excess conductive material is removed.

10. Process for the production of an electronic component according to Claim 8, wherein a solution of a poly-o-hydroxyamide of the formula I in a solvent is prepared, the solution is applied to a substrate which has, on its surface, metallic structures between which trenches are arranged, the solvent is evaporated so that the trenches are filled with the poly-o-hydroxyamide of the formula I, and the substrate is heated in order to cyclize the poly-o-hydroxyamide of the formula I to give the polybenzoxazole according to Claim 4.

## Revendications

1. Poly-o-hydroxyamides de Formule I 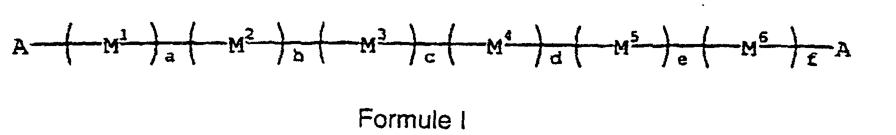 avec les significations :
M¹: 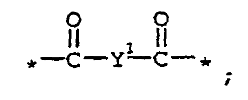
M²: 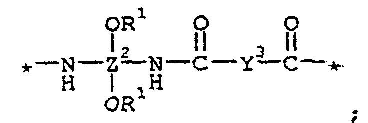
M³, M⁴, M⁵, chacun indépendamment : 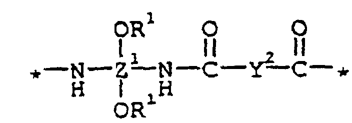 ou 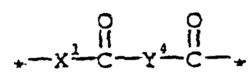 ou 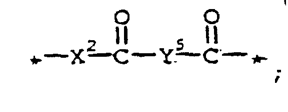
M⁶: 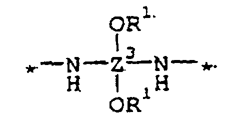 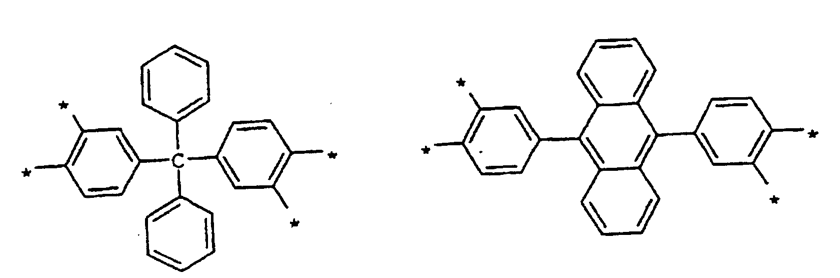 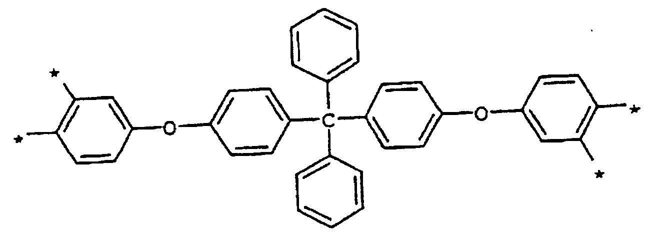 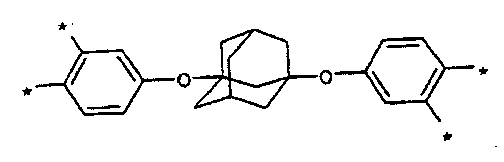 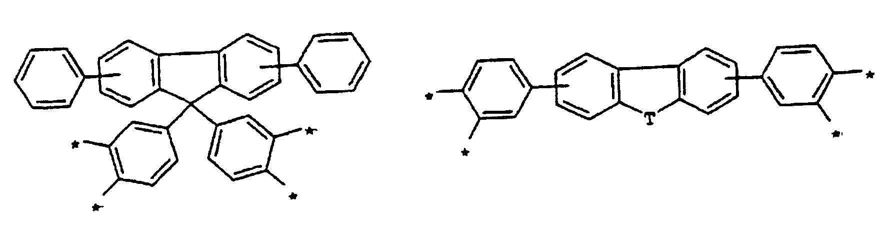 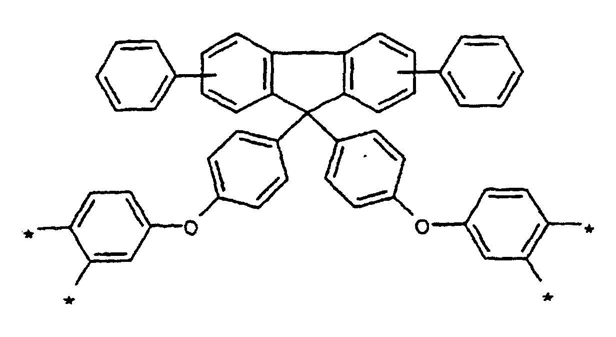 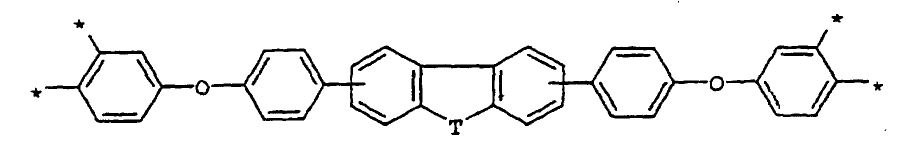
Z¹, Z³: chacun indépendamment, la même signification que celle indiquée pour Z², ainsi qu'en outre 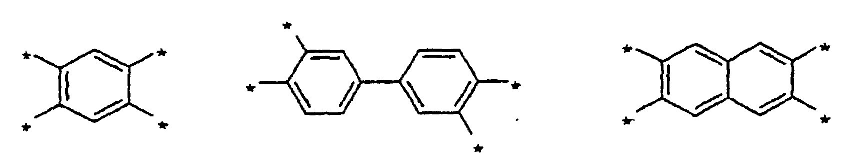 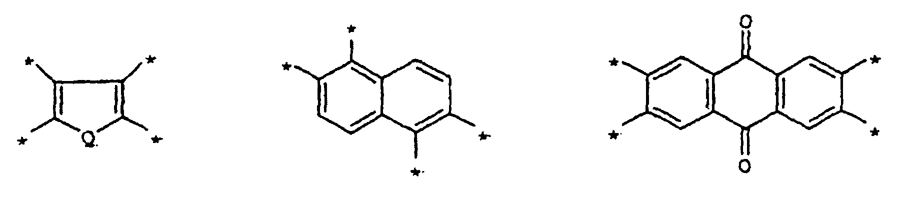 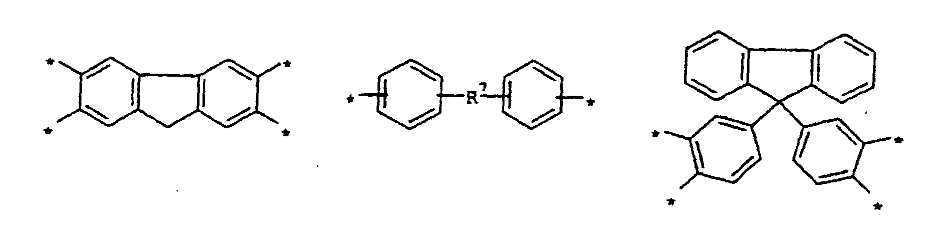 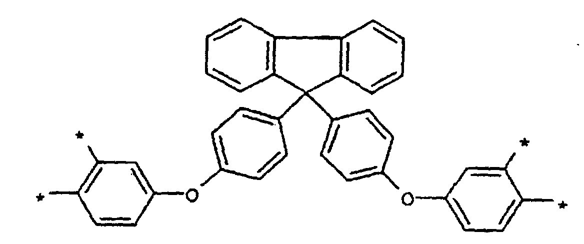
Y¹, Y², Y³, Y⁴, Y⁵,: 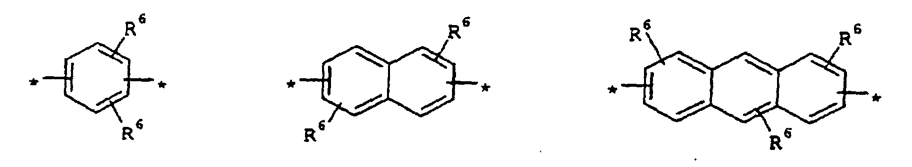 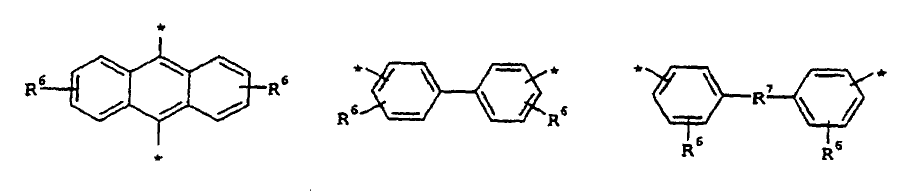 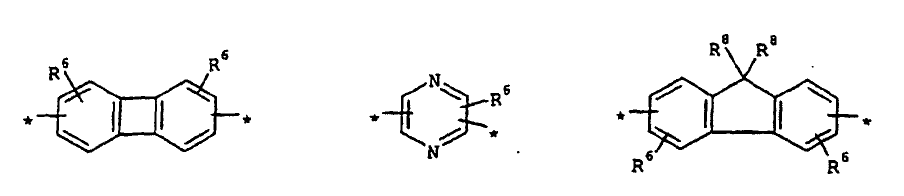 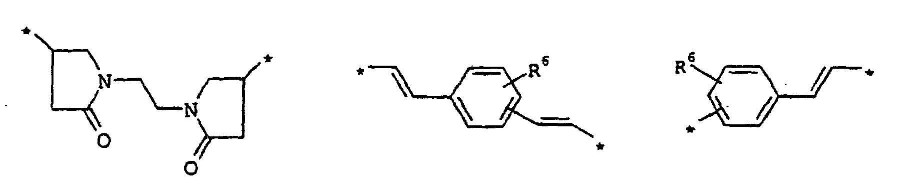 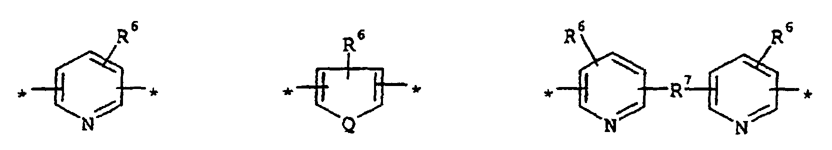 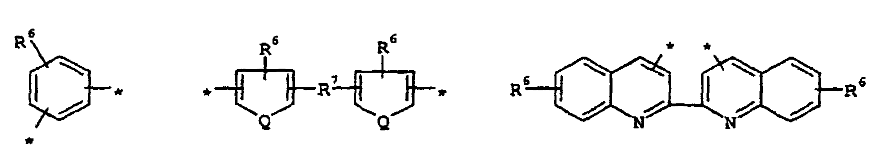 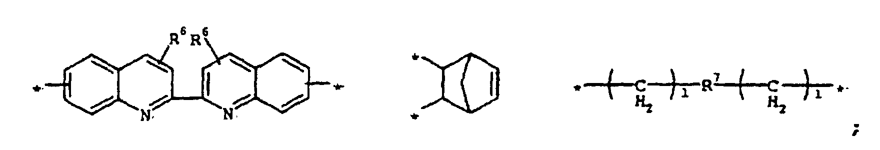
X¹, X², respectivement indépendamment : 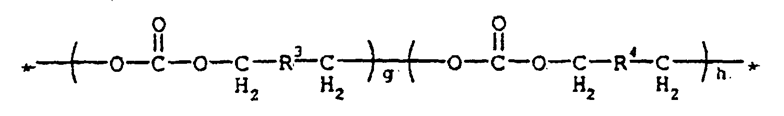 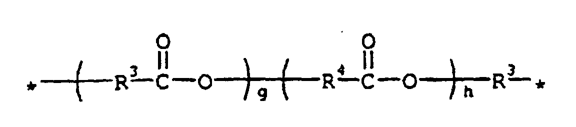 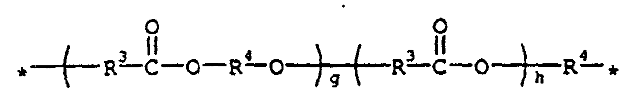 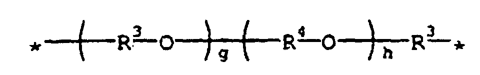 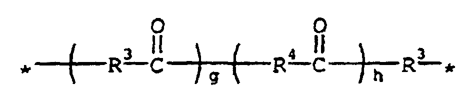 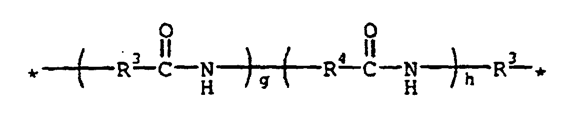
T: 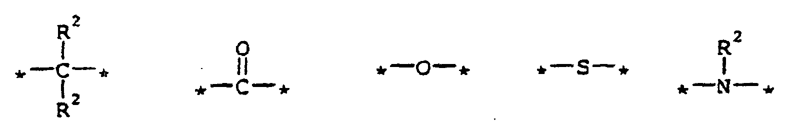
A : est, lorsque a = 0 et/ou f = 1 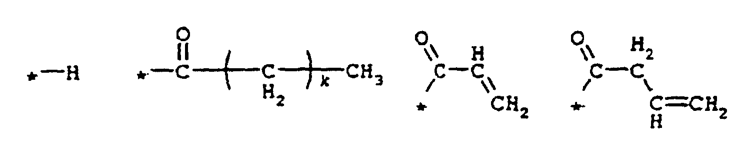 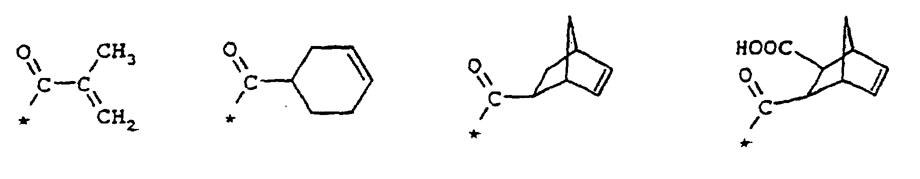 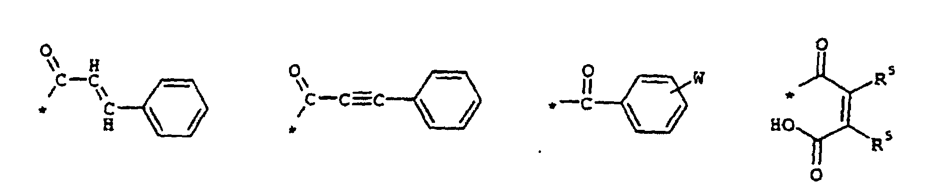 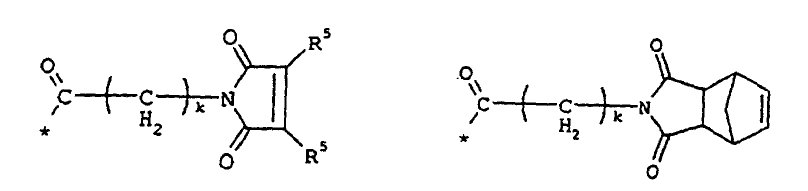 quand a = 1 et/ou f = 0, A est : 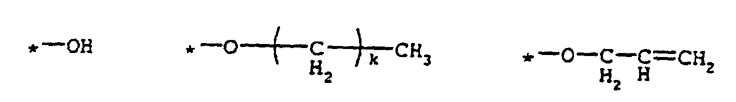 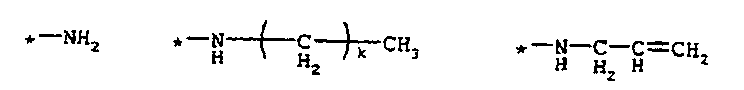 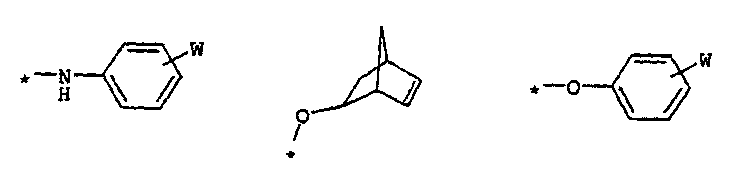
W: 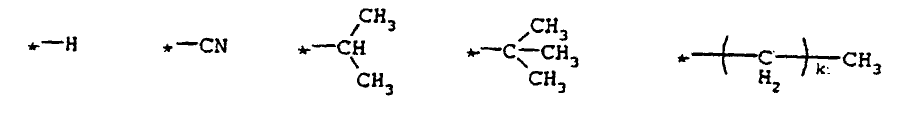 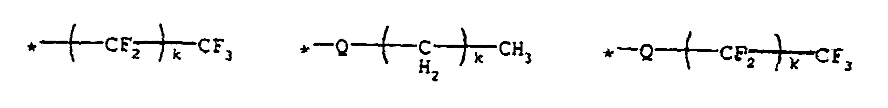 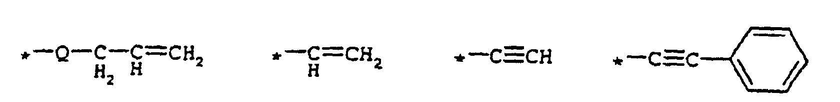 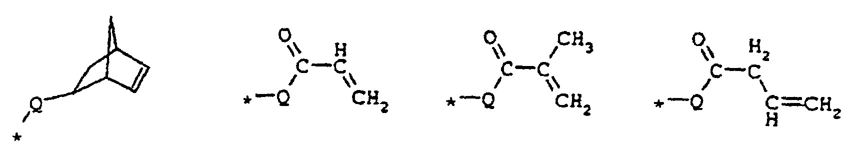 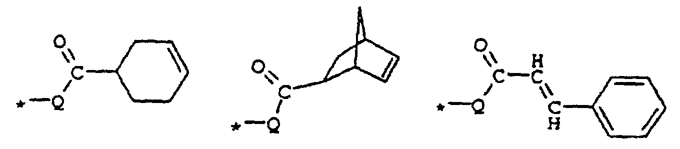 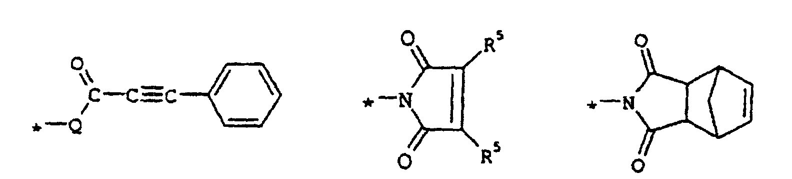 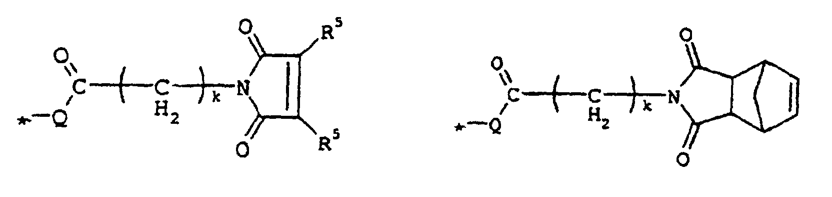
Q: 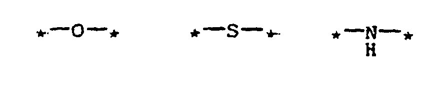
R¹: 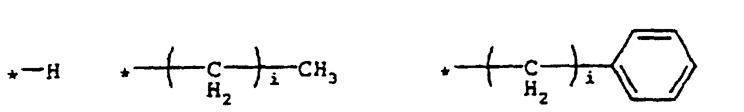 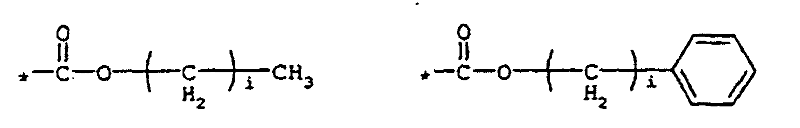
R² : -H, un groupe alcoyle ayant de 1 à 10 atomes de carbone, un groupe aryle ou un groupe hétéroaryle
R³, R⁴ : chacun indépendamment un groupe alcoylène, arylène ou cycloalcoylène substitué ou non substitué ;
R⁵: 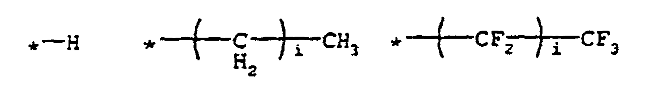 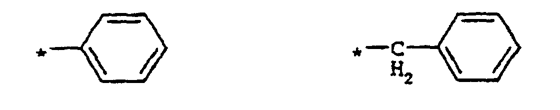
R⁶: -H, -CF₃, -OH, -SH, -COOH, -N(R²)₂, un groupe alcoyle, aryle ou hétéroaryle, ainsi que 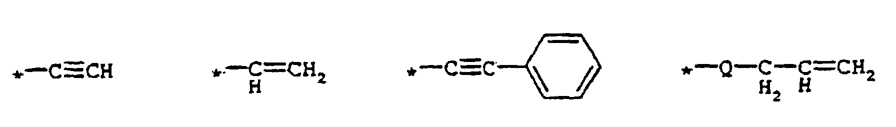 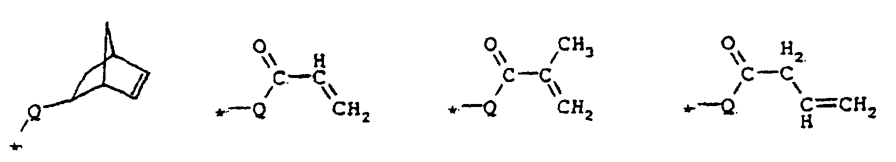 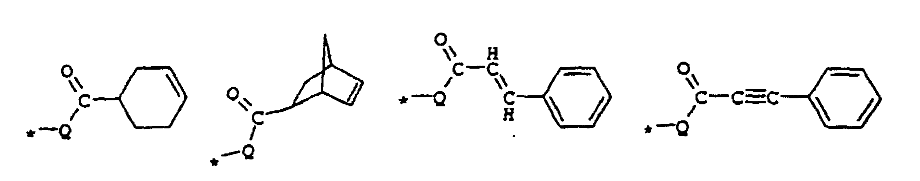 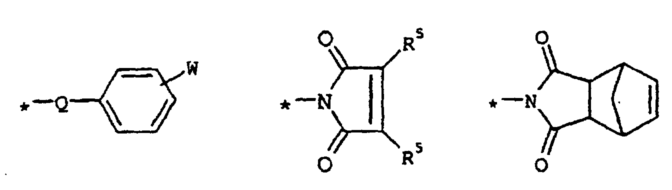 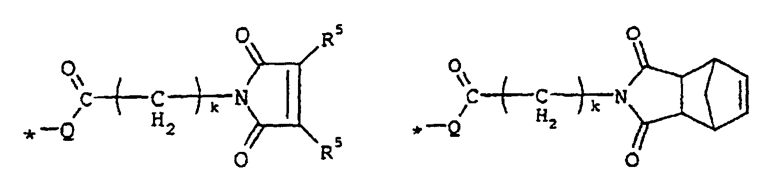
R⁷: -O-, -CO-, -NR⁴-, -S-, -SO₂-, -CH₂-, -S₂-, ainsi que 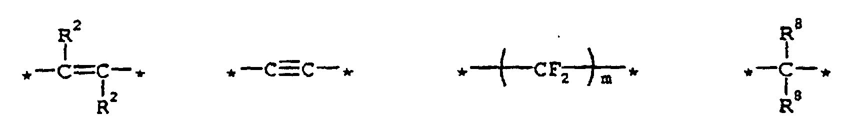 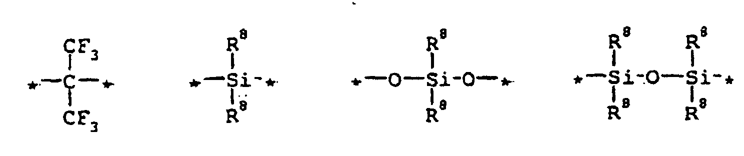 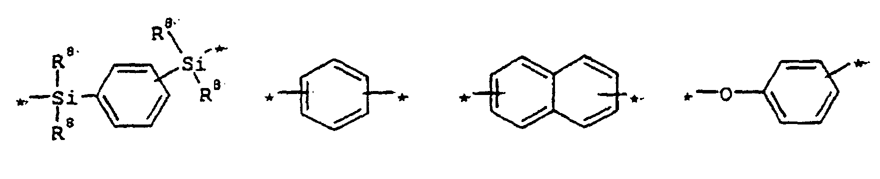 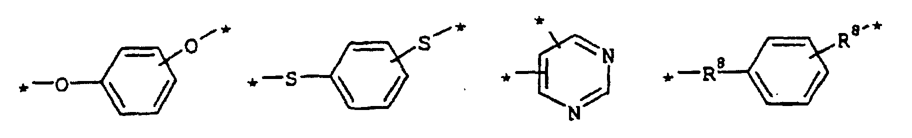 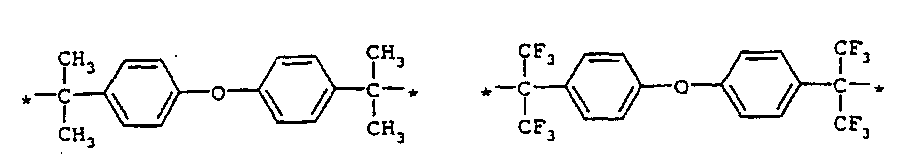 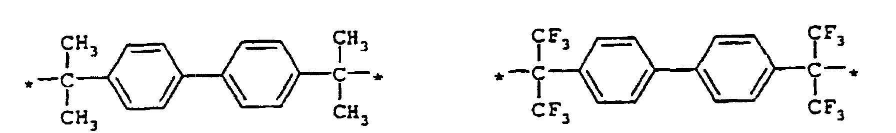
R⁸: un groupe alcoyle ayant de 1 à 10 atomes de carbone, un groupe aryle ou un groupe hétéroaryle ;
a: 0 ou 1 ;
b: 1 à 200 ;
c: 0 à 200 ;
d: 0 à 50 ;
e: 0 à 50 ;
f: 0 ou 1 ;
g: 0 à 100 ;
h: 0 à 100 ;
i: 0 à 10 ;
k: 0 à 10 ;
l: 1 à10;
m: 1 à10;
g et h n'étant pas simultanément égaux à 0 et lorsque R⁷ = -CH₂-, I = 0 à 10.

2. Poly-o-hydroxyamides suivant la revendication 1, dans lequel au moins l'une des conditions suivantes est satisfaite :
b = 5 à 100 ;
c = 0 à 50 ;
d = 0 à 20 ;
e = 0 à 20.

3. Poly-o-hydroxyamides suivant la revendication 1 ou 2, dans lequel au moins l'un des indices c, d et e est différent de zéro.

4. Polybenzoxazole obtenu à partir de poly-o-hydroxyamide de Formule I.

5. Procédé de préparation de poly-o-hydroxyamide de Formule I, dans lequel on met un monomère de Formule II 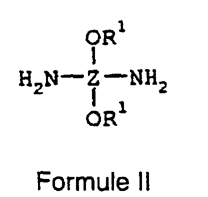 dans laquelle Z représente Z¹, Z² ou Z³, et Z¹, Z², Z³ ainsi que R¹ ont la signification indiquée à la revendication 1,
à réagir sur un moins un acide dicarboxylique ou un dérivé activé d'acide dicarboxylique de Formule III 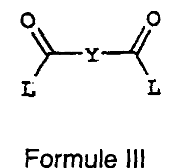 dans laquelle L est un groupe hydroxy ou un groupe d'activation et Y représente Y¹, Y², Y³, Y⁴, Y⁵, et Y¹, Y², Y³, Y⁴, Y⁵ ont la signification indiquée à la revendication 1.

6. Procédé suivant la revendication 5, dans lequel on effectue la réaction en la présence d'une base.

7. Procédé de préparation de polybenzoxazole suivant la revendication 4, dans lequel on chauffe des poly-o-hydroxyamides de Formule I.

8. Composant électronique comprenant un diélectrique, qui contient un polybenzoxazole suivant la revendication 4.

9. Procédé de production d'un composant électronique suivant la revendication 8, dans lequel on prépare une solution d'un poly-o-hydroxyamide de Formule I dans un solvant, on dépose la solution sur un substrat et on évapore le solvant, de manière à obtenir une pellicule, on chauffe la pellicule pour cycliser le poly-o-hydroxyamide de Formule I en le polybenzoxazole suivant la revendication 4 et on structure la pellicule pour obtenir une structure de réserve qui a des sillons, on dépose une matière conductrice sur la structure de réserve, de façon à remplir les sillons de la matière conductrice, et on élimine de la matière conductrice en excès.

10. Procédé de production d'un composant électronique suivant la revendication 8, dans lequel on prépare une solution d'un poly-o-hydroxyamide de Formule I dans un solvant, on dépose la solution sur un substrat qui a sur sa surface des structures métalliques entre lesquelles sont disposés des sillons, on évapore le solvant, de façon à remplir les sillons du poly-o-hydroxyamide de Formule I, et on chauffe le substrat pour cycliser le poly-o-hydroxyamide de Formule I en le polybenzoxazole suivant la revendication 4.
